# EUROPEAN PATENT APPLICATION

(11) **EP 3 352 512 A1**
(43) Date of publication of application: **25.07.2018**
(21) Application number: 15906007.8
(22) Date of filing: 12.10.2015
(51) Int. Cl.: H04W 72/04

(54) **MESSAGE TRANSMISSION METHOD AND USER EQUIPMENT**

(71) Applicant: Huawei Technologies Co., Ltd., Longgang District Shenzhen, Guangdong 518129 (CN)
(72) Inventor: SUN, Yinghua, Shenzhen Guangdong 518129 (CN); ZHANG, Xingwei, Shenzhen Guangdong 518129 (CN); LI, Chao, Shenzhen Guangdong 518129 (CN)
(74) Representative: Thun, Clemens
(86) International application number: PCT/CN2015/091757
(87) International publication number: WO 2017/063122

(57) **Abstract**

Embodiments of the present invention provide a message transmission method and user equipment. The method includes: determining a priority of a to-be-sent message; obtaining a resource parameter, where the resource parameter includes a parameter that indicates a resource pool use status and/or a resource requirement for sending the to-be-sent message; and selecting, according to the priority of the to-be-sent message and the resource parameter, a resource pool and/or a transmission mode for sending the to-be-sent message. The user equipment includes a determining module, an obtaining module, and a selection module. In the embodiments of the present invention, user equipment that is to send a to-be-sent message determines a priority of the to-be-sent message; obtains a resource parameter; and selects, according to the priority of the to-be-sent message and the resource parameter, a resource pool and/or a transmission mode for sending the to-be-sent message, and sends the to-be-sent message. The user equipment may flexibly select a resource according to different resource parameters, so as to improve resource utilization, and avoid a waste of resources.

## Description

### TECHNICAL FIELD

The present invention relates to the communications field, and specifically, to a message transmission method and user equipment.

### BACKGROUND

As a communications technology of a Long Term Evolution (Long Term Evolution, "LTE" for short) system continuously develops, load of a cellular network becomes increasingly heavy, and current spectrum resources become increasingly scarce. In a conventional communications technology, both signaling interworking and data exchange between user equipments (User Equipment, "UE" for short) need to be implemented by means of forwarding by a base station. In this case, a device-to-device (Device to Device, "D2D" for short) direct communications technology emerges accordingly. D2D resolves a problem that the current spectrum resources are scarce and the load of the cellular network is excessively heavy. In a D2D communication mode, direct interaction may be performed between UEs or may be performed between UEs with the help of a network without a need of forwarding by a base station. This can reduce base station load.

In the prior art, there are two modes of allocating communications resources to a D2D device: Mode 1 and Mode 2. In Mode 1, resources are allocated by using a centralized control method, resources of D2D are scheduled by a base station or a relay node, and the D2D device directly transmits data and control information on an allocated resource. Resource allocation in a centralized control mode is mainly used for a network coverage scenario. In Mode 2, UE contends for a resource by means of self-selection. Mode 2 is a distributed resource reuse manner. Data transmission is performed by sending a resource obtained by UE from a resource pool by means of contention. However, in Mode 2, in this contention-based resource allocation manner, no base station or relay node performs coordination, a resource conflict may occur between different UEs, and resource contention also occurs on services of different priorities. Consequently, a high-priority service may obtain no corresponding resource by means of contention, and information sending fails. As a result, spectrum resource utilization is low, and user experience is poor.

### SUMMARY

A message transmission method and user equipment provided in embodiments of the present invention can improve resource utilization.

According to a first aspect, a message transmission method is provided, where the method includes: determining a priority of a to-be-sent message; obtaining a resource parameter, where the resource parameter includes a parameter that indicates a resource pool use status and/or a resource requirement for sending the to-be-sent message; and selecting, according to the priority of the to-be-sent message and the resource parameter, a resource pool and/or a transmission mode for sending the to-be-sent message.

With reference to the first aspect, in a first possible implementation, the resource parameter includes a size of the to-be-sent message and/or a quantity of user equipments UEs that perform sending; and the selecting, according to the priority of the to-be-sent message and the resource parameter, a resource pool and/or a transmission mode for sending the to-be-sent message includes: when the priority of the to-be-sent message is a first priority, selecting a second resource pool if the size of the to-be-sent message exceeds a first threshold and/or the quantity of the UEs that perform sending exceeds a second threshold, where the second resource pool is a resource pool corresponding to a second priority, and the first priority is higher than the second priority.

With reference to the first aspect, in a second possible implementation, the resource parameter includes a quantity of UEs that perform sending and/or a parameter of a buffer status of UE that is to send the to-be-sent message; and the selecting, according to the priority of the to-be-sent message and the resource parameter, a resource pool and/or a transmission mode for sending the to-be-sent message includes: when the priority of the to-be-sent message is a first priority, selecting a second resource pool if a buffer of the UE that is to send the to-be-sent message is in a busy state and/or the quantity of the UEs that perform sending exceeds a third threshold, where the second resource pool is a resource pool corresponding to a second priority, and the first priority is higher than the second priority.

With reference to the first aspect, in a third possible implementation, the resource parameter includes an occupancy rate of a first resource pool and/or an occupancy rate of a second resource pool, the first resource pool is a resource pool corresponding to the first priority, the second resource pool is a resource pool corresponding to a second priority, and the first priority is higher than the second priority; and the selecting, according to the priority of the to-be-sent message and the resource parameter, a resource pool and/or a transmission mode for sending the to-be-sent message includes: when the priority of the to-be-sent message is the first priority, selecting the second resource pool if the occupancy rate of the first resource pool exceeds a fourth threshold and/or the occupancy rate of the second resource pool exceeds a fifth threshold.

With reference to any one of the first possible implementation of the first aspect, the second possible implementation of the first aspect, or the third possible implementation of the first aspect, in a fourth possible implementation, the method further includes: sending resource preemption indication information and the to-be-sent message by using the second resource pool; or sending the to-be-sent message by using the second resource pool and by using a first predefined transmit power, where the first predefined transmit power is higher than a predefined transmit power corresponding to the second resource pool, and the to-be-sent message carries a message type of the to-be-sent message.

With reference to the first aspect, in a fifth possible implementation, the resource parameter is used to indicate whether a second resource can be preempted for sending a message of a first priority, where the second resource is a resource selected for sending a message of a second priority, and the first priority is higher than the second priority; and the selecting, according to the priority of the to-be-sent message and the resource parameter, a resource pool and/or a transmission mode for sending the to-be-sent message includes: when the priority of the to-be-sent message is the first priority, if the resource parameter indicates that the second resource can be preempted, selecting the second resource as a resource for sending the to-be-sent message.

With reference to the fifth possible implementation of the first aspect, in a sixth possible implementation, the resource parameter includes a first value generated by UE that is to send the message of the second priority, and when the first value meets a preset condition, the resource parameter indicates that the second resource can be preempted.

With reference to the sixth possible implementation of the first aspect, in a seventh possible implementation, the UE that is to send the message of the second priority determines that a third resource can be preempted, the third resource is a resource selected for sending a message of a third priority, and the third priority is not higher than the second priority.

With reference to the first aspect, in an eighth possible implementation, the resource parameter includes an occupancy rate of a first resource pool, and the first resource pool is a resource pool corresponding to a first priority; and the selecting, according to the resource parameter, a resource pool and/or a transmission mode for sending the to-be-sent message, and sending the to-be-sent message includes: when the priority of the to-be-sent message is a second priority, selecting a second resource pool and a transmission mode if the occupancy rate of the first resource pool exceeds a sixth threshold, where the transmission mode is a long period mode, an interval mode, or a switch mode, the second resource pool is a resource pool corresponding to the second priority, and the first priority is higher than the second priority.

With reference to the first aspect, in a ninth possible implementation, the resource parameter is used to indicate whether there is a case in which a message of a first priority occupies a second resource pool, the second resource pool is a resource pool corresponding to a second priority, and the first priority is higher than the second priority; and the selecting, according to the priority of the to-be-sent message and the resource parameter, a resource pool and/or a transmission mode for sending the to-be-sent message includes: when the priority of the to-be-sent message is the second priority, selecting the second resource pool and a transmission mode if there is the case in which the message of the first priority occupies the second resource pool, where the transmission mode is a long period mode, an interval mode, or a switch mode.

With reference to the first aspect, in a tenth possible implementation, the resource parameter includes a quantity of UEs that perform sending and/or an occupancy rate of a second resource pool, and the second resource pool is a resource pool corresponding to a second priority; and the selecting, according to the priority of the to-be-sent message and the resource parameter, a resource pool and/or a transmission mode for sending the to-be-sent message includes: when the priority of the to-be-sent message is the second priority, selecting the second resource pool and a transmission mode if the quantity of the UEs that perform sending exceeds a seventh threshold and/or the occupancy rate of the second resource pool exceeds an eighth threshold, where the transmission mode is a long period mode, an interval mode, or a switch mode.

With reference to the first aspect, in an eleventh possible implementation, the resource parameter includes a size of the to-be-sent message and/or a quantity of UEs that perform sending; and the selecting, according to the resource parameter, a resource pool and/or a transmission mode for sending the to-be-sent message, and sending the to-be-sent message includes: when the priority of the to-be-sent message is a first priority, selecting a common resource pool if the size of the to-be-sent message exceeds a ninth threshold and/or the quantity of the UEs that perform sending exceeds a tenth threshold.

With reference to the first aspect, in a twelfth possible implementation, the resource parameter includes a parameter of a buffer status of UE that is to send the to-be-sent message and/or an occupancy rate of a first resource pool, and the first resource pool is a resource pool corresponding to a first priority; and the selecting, according to the priority of the to-be-sent message and the resource parameter, a resource pool and/or a transmission mode for sending the to-be-sent message includes: when the priority of the to-be-sent message is the first priority, selecting a common resource pool if a buffer of the UE that is to send the to-be-sent message is in a busy state and/or the occupancy rate of the first resource pool exceeds an eleventh threshold.

With reference to the first aspect, in a thirteenth possible implementation, the resource parameter includes an occupancy rate of a common resource pool; and the selecting, according to the priority of the to-be-sent message and the resource parameter, a resource pool and/or a transmission mode for sending the to-be-sent message includes: when the priority of the to-be-sent message is a first priority, selecting the common resource pool if the occupancy rate of the common resource pool exceeds a twelfth threshold.

With reference to any one of the eleventh possible implementation of the first aspect, the twelfth possible implementation of the first aspect, or the thirteenth possible implementation of the first aspect, in a fourteenth possible implementation, the method further includes: sending resource preemption indication information and the to-be-sent message by using the common resource pool; or sending the to-be-sent message by using the common resource pool and by using a second predefined transmit power, where the second predefined transmit power is higher than a predefined transmit power corresponding to the common resource pool, and the to-be-sent message carries a message type of the to-be-sent message.

With reference to the first aspect, in a fifteenth possible implementation, the resource parameter includes an occupancy rate of a first resource pool, and the first resource pool is a resource pool corresponding to a first priority; and the selecting, according to the priority of the to-be-sent message and the resource parameter, a resource pool and/or a transmission mode for sending the to-be-sent message includes: when the priority of the to-be-sent message is a second priority, selecting a common resource pool and a transmission mode if the occupancy rate of the first resource pool exceeds a thirteenth threshold, where the transmission mode is a long period mode, an interval mode, or a switch mode, and the first priority is higher than the second priority.

With reference to the first aspect, in a sixteenth possible implementation, the resource parameter includes a quantity of UEs that perform sending; and the selecting, according to the priority of the to-be-sent message and the resource parameter, a resource pool and/or a transmission mode for sending the to-be-sent message includes: when the priority of the to-be-sent message is a second priority, selecting a common resource pool and a transmission mode if the quantity of the UEs that perform sending exceeds a fourteenth threshold, where the transmission mode is a long period mode, an interval mode, or a switch mode.

With reference to the first aspect, in a seventeenth possible implementation, the resource parameter includes an occupancy rate of a common resource pool and/or whether there is a case in which a message of a first priority occupies the common resource pool; and the selecting, according to the priority of the to-be-sent message and the resource parameter, a resource pool and/or a transmission mode for sending the to-be-sent message includes: when the priority of the to-be-sent message is a second priority, selecting the common resource pool and a transmission mode if the occupancy rate of the common resource pool exceeds a fifteenth threshold and/or there is the case in which the message of the first priority occupies the common resource pool, where the transmission mode is a long period mode, an interval mode, or a switch mode, and the first priority is higher than the second priority.

With reference to the first aspect, in an eighteenth possible implementation, the resource parameter includes a first parameter that indicates whether a second resource can be preempted for sending a message of a first priority and a second parameter that indicates whether there is a resource requirement for sending the message of the first priority, where the second resource is a resource selected for sending a message of a second priority, and the first priority is higher than the second priority; and the selecting, according to the priority of the to-be-sent message and the resource parameter, a resource pool and/or a transmission mode for sending the to-be-sent message includes: when the priority of the to-be-sent message is the second priority, if the first parameter indicates that the second resource can be preempted, and the second parameter indicates that there is a resource requirement for sending the message of the first priority, skipping selecting the second resource as a resource for sending the to-be-sent message.

With reference to the eighteenth possible implementation of the first aspect, in a nineteenth possible implementation, the first parameter includes a second value generated by UE that is to send the message of the second priority, and when the second value meets a preset condition, the first parameter indicates that the second resource can be preempted.

With reference to the nineteenth possible implementation of the first aspect, in a twentieth possible implementation, the UE that is to send the message of the second priority determines that a third resource can be preempted, the third resource is a resource selected for sending a message of a third priority, and the third priority is not higher than the second priority.

According to a second aspect, user equipment UE used for message transmission is provided, where the UE includes: a determining module, configured to determine a priority of a to-be-sent message; an obtaining module, configured to obtain a resource parameter, where the resource parameter includes a parameter that indicates a resource pool use status and/or a resource requirement for sending the to-be-sent message; and a selection module, configured to select, according to the priority that is of the to-be-sent message and that is determined by the determining module and the resource parameter obtained by the obtaining module, a resource pool and/or a transmission mode for sending the to-be-sent message.

With reference to the second aspect, in a first possible implementation, the resource parameter includes a size of the to-be-sent message and/or a quantity of UEs that perform sending; and the selection module is specifically configured to: when the priority of the to-be-sent message is a first priority, select a second resource pool if the size of the to-be-sent message exceeds a first threshold and/or the quantity of the UEs that perform sending exceeds a second threshold, where the second resource pool is a resource pool corresponding to a second priority, and the first priority is higher than the second priority.

With reference to the second aspect, in a second possible implementation, the resource parameter includes a quantity of UEs that perform sending and/or a parameter of a buffer status of UE that is to send the to-be-sent message; and the selection module is specifically configured to: when the priority of the to-be-sent message is a first priority, select a second resource pool if a buffer of the UE that is to send the to-be-sent message is in a busy state and/or the quantity of the UEs that perform sending exceeds a third threshold, where the second resource pool is a resource pool corresponding to a second priority, and the first priority is higher than the second priority.

With reference to the second aspect, in a third possible implementation, the resource parameter includes an occupancy rate of a first resource pool and/or an occupancy rate of a second resource pool, the first resource pool is a resource pool corresponding to the first priority, the second resource pool is a resource pool corresponding to a second priority, and the first priority is higher than the second priority; and the selection module is specifically configured to: when the priority of the to-be-sent message is the first priority, select the second resource pool if the occupancy rate of the first resource pool exceeds a fourth threshold and/or the occupancy rate of the second resource pool exceeds a fifth threshold.

With reference to any one of the first possible implementation of the second aspect, the second possible implementation of the second aspect, or the third possible implementation of the second aspect, in a fourth possible implementation, the UE further includes a first sending module, where the first sending module is configured to send resource preemption indication information and the to-be-sent message by using the second resource pool; or the first sending module is configured to send the to-be-sent message by using the second resource pool and by using a first predefined transmit power, where the first predefined transmit power is higher than a predefined transmit power corresponding to the second resource pool, and the to-be-sent message carries a message type of the to-be-sent message.

With reference to the second aspect, in a fifth possible implementation, the resource parameter is used to indicate whether a second resource can be preempted for sending a message of a first priority, where the second resource is a resource selected for sending a message of a second priority, and the first priority is higher than the second priority; and the selection module is specifically configured to: when the priority of the to-be-sent message is the first priority, if the resource parameter indicates that the second resource can be preempted, select the second resource as a resource for sending the to-be-sent message.

With reference to the fifth possible implementation of the second aspect, in a sixth possible implementation, the resource parameter includes a first value generated by UE that is to send the message of the second priority, and when the first value meets a preset condition, the resource parameter indicates that the second resource can be preempted.

With reference to the sixth possible implementation of the second aspect, in a seventh possible implementation, the UE that is to send the message of the second priority determines that a third resource can be preempted, the third resource is a resource selected for sending a message of a third priority, and the third priority is not higher than the second priority.

With reference to the second aspect, in an eighth possible implementation, the resource parameter includes an occupancy rate of a first resource pool, and the first resource pool is a resource pool corresponding to a first priority; and the selection module is specifically configured to: when the priority of the to-be-sent message is a second priority, select a second resource pool and a transmission mode if the occupancy rate of the first resource pool exceeds a sixth threshold, where the transmission mode is a long period mode, an interval mode, or a switch mode, the second resource pool is a resource pool corresponding to the second priority, and the first priority is higher than the second priority.

With reference to the second aspect, in a ninth possible implementation, the resource parameter is used to indicate whether there is a case in which a message of a first priority occupies a second resource pool, the second resource pool is a resource pool corresponding to a second priority, and the first priority is higher than the second priority; and the selection module is specifically configured to: when the priority of the to-be-sent message is the second priority, select the second resource pool and a transmission mode if there is the case in which the message of the first priority occupies the second resource pool, where the transmission mode is a long period mode, an interval mode, or a switch mode.

With reference to the second aspect, in a tenth possible implementation, the resource parameter includes a quantity of UEs that perform sending and/or an occupancy rate of a second resource pool, and the second resource pool is a resource pool corresponding to a second priority; and the selection module is specifically configured to: when the priority of the to-be-sent message is the second priority, select the second resource pool and a transmission mode if the quantity of the UEs that perform sending exceeds a seventh threshold and/or the occupancy rate of the second resource pool exceeds an eighth threshold, where the transmission mode is a long period mode, an interval mode, or a switch mode.

With reference to the second aspect, in an eleventh possible implementation, the resource parameter includes a size of the to-be-sent message and/or a quantity of user equipments UEs that perform sending; and the selection module is specifically configured to: when the priority of the to-be-sent message is a first priority, select a common resource pool if the size of the to-be-sent message exceeds a ninth threshold and/or the quantity of the user equipments UEs that perform sending exceeds a tenth threshold.

With reference to the second aspect, in a twelfth possible implementation, the resource parameter includes a parameter of a buffer status of UE that is to send the to-be-sent message and/or an occupancy rate of a first resource pool, and the first resource pool is a resource pool corresponding to a first priority; and the selection module is specifically configured to: when the priority of the to-be-sent message is the first priority, select a common resource pool if a buffer of the UE that is to send the to-be-sent message is in a busy state and/or the occupancy rate of the first resource pool exceeds an eleventh threshold.

With reference to the second aspect, in a thirteenth possible implementation, the resource parameter includes an occupancy rate of a common resource pool; and the selection module is specifically configured to: when the priority of the to-be-sent message is a first priority, select the common resource pool if the occupancy rate of the common resource pool exceeds a twelfth threshold.

With reference to any one of the eleventh possible implementation of the second aspect, the twelfth possible implementation of the second aspect, or the thirteenth possible implementation of the second aspect, in a fourteenth possible implementation, the method further includes a second sending module, where the second sending module is configured to send resource preemption indication information and the to-be-sent message by using the common resource pool; or the first sending module is configured to send the to-be-sent message by using the common resource pool and by using a second predefined transmit power, where the second predefined transmit power is higher than a predefined transmit power corresponding to the common resource pool, and the to-be-sent message carries a message type of the to-be-sent message.

With reference to the second aspect, in a fifteenth possible implementation, the resource parameter includes an occupancy rate of a first resource pool, and the first resource pool is a resource pool corresponding to a first priority; and the selection module is specifically configured to: when the priority of the to-be-sent message is a second priority, select a common resource pool and a transmission mode if the occupancy rate of the first resource pool exceeds a thirteenth threshold, where the transmission mode is a long period mode, an interval mode, or a switch mode, and the first priority is higher than the second priority.

With reference to the second aspect, in a sixteenth possible implementation, the resource parameter includes a quantity of UEs that perform sending; and the selection module is specifically configured to: when the priority of the to-be-sent message is a second priority, select a common resource pool and a transmission mode if the quantity of the UEs that perform sending exceeds a fourteenth threshold, where the transmission mode is a long period mode, an interval mode, or a switch mode.

With reference to the second aspect, in a seventeenth possible implementation, the resource parameter includes an occupancy rate of a common resource pool and/or whether there is a case in which a message of a first priority occupies the common resource pool; and the selection module is specifically configured to: when the priority of the to-be-sent message is a second priority, select the common resource pool and a transmission mode if the occupancy rate of the common resource pool exceeds a fifteenth threshold and/or there is the case in which the message of the first priority occupies the common resource pool, where the transmission mode is a long period mode, an interval mode, or a switch mode, and the first priority is higher than the second priority.

With reference to the second aspect, in an eighteenth possible implementation, the resource parameter includes a first parameter that indicates whether a second resource can be preempted for sending a message of a first priority and a second parameter that indicates whether there is a resource requirement for sending the message of the first priority, where the second resource is a resource selected for sending a message of a second priority, and the first priority is higher than the second priority; and the selection module is specifically configured to: when the priority of the to-be-sent message is the second priority, if the first parameter indicates that the second resource can be preempted, and the second parameter indicates that there is a resource requirement for sending the message of the first priority, skip selecting the second resource as a resource for sending the to-be-sent message.

With reference to the eighteenth possible implementation of the second aspect, in a nineteenth possible implementation, the first parameter includes a second value generated by UE that is to send the message of the second priority, and when the second value meets a preset condition, the first parameter indicates that the second resource can be preempted.

With reference to the nineteenth possible implementation of the second aspect, in a twentieth possible implementation, the UE that is to send the message of the second priority determines that a third resource can be preempted, the third resource is a resource selected for sending a message of a third priority, and the third priority is not higher than the second priority.

According to a third aspect, user equipment used for message transmission is provided, where the user equipment includes a processor and a memory; the memory stores a program, the processor executes the program, and the processor is configured to: determine a priority of a to-be-sent message; obtain a resource parameter, where the resource parameter includes a parameter that indicates a resource pool use status and/or a resource requirement for sending the to-be-sent message; and select, according to the priority of the to-be-sent message and the resource parameter, a resource pool and/or a transmission mode for sending the to-be-sent message.

With reference to the third aspect, in a first possible implementation, the resource parameter includes a size of the to-be-sent message and/or a quantity of user equipments UEs that perform sending; and the processor is configured to: when the priority of the to-be-sent message is a first priority, select a second resource pool if the size of the to-be-sent message exceeds a first threshold and/or the quantity of the UEs that perform sending exceeds a second threshold, where the second resource pool is a resource pool corresponding to a second priority, and the first priority is higher than the second priority.

With reference to the third aspect, in a second possible implementation, the resource parameter includes a quantity of UEs that perform sending and/or a parameter of a buffer status of UE that is to send the to-be-sent message; and the processor is configured to: when the priority of the to-be-sent message is a first priority, select a second resource pool if a buffer of the UE that is to send the to-be-sent message is in a busy state and/or the quantity of the UEs that perform sending exceeds a third threshold, where the second resource pool is a resource pool corresponding to a second priority, and the first priority is higher than the second priority.

With reference to the third aspect, in a third possible implementation, the resource parameter includes an occupancy rate of a first resource pool and/or an occupancy rate of a second resource pool, the first resource pool is a resource pool corresponding to the first priority, the second resource pool is a resource pool corresponding to a second priority, and the first priority is higher than the second priority; and the processor is configured to: when the priority of the to-be-sent message is the first priority, select the second resource pool if the occupancy rate of the first resource pool exceeds a fourth threshold and/or the occupancy rate of the second resource pool exceeds a fifth threshold.

With reference to any one of the first possible implementation of the third aspect, the second possible implementation of the third aspect, or the third possible implementation of the third aspect, in a fourth possible implementation, the processor is further configured to: send resource preemption indication information and the to-be-sent message by using the second resource pool; or send the to-be-sent message by using the second resource pool and by using a first predefined transmit power, where the first predefined transmit power is higher than a predefined transmit power corresponding to the second resource pool, and the to-be-sent message carries a message type of the to-be-sent message.

With reference to the third aspect, in a fifth possible implementation, the resource parameter is used to indicate whether a second resource can be preempted for sending a message of a first priority, where the second resource is a resource selected for sending a message of a second priority, and the first priority is higher than the second priority; and the processor is configured to: when the priority of the to-be-sent message is the first priority, if the resource parameter indicates that the second resource can be preempted, select the second resource as a resource for sending the to-be-sent message.

With reference to the fifth possible implementation of the third aspect, in a sixth possible implementation, the resource parameter includes a first value generated by UE that is to send the message of the second priority, and when the first value meets a preset condition, the resource parameter indicates that the second resource can be preempted.

With reference to the sixth possible implementation of the third aspect, in a seventh possible implementation, the UE that is to send the message of the second priority determines that a third resource can be preempted, the third resource is a resource selected for sending a message of a third priority, and the third priority is not higher than the second priority.

With reference to the third aspect, in an eighth possible implementation, the resource parameter includes an occupancy rate of a first resource pool, and the first resource pool is a resource pool corresponding to a first priority; and the processor is configured to: when the priority of the to-be-sent message is a second priority, select a second resource pool and a transmission mode if the occupancy rate of the first resource pool exceeds a sixth threshold, where the transmission mode is a long period mode, an interval mode, or a switch mode, the second resource pool is a resource pool corresponding to the second priority, and the first priority is higher than the second priority.

With reference to the third aspect, in a ninth possible implementation, the resource parameter is used to indicate whether there is a case in which a message of a first priority occupies a second resource pool, the second resource pool is a resource pool corresponding to a second priority, and the first priority is higher than the second priority; and the processor is configured to: when the priority of the to-be-sent message is the second priority, select the second resource pool and a transmission mode if there is the case in which the message of the first priority occupies the second resource pool, where the transmission mode is a long period mode, an interval mode, or a switch mode.

With reference to the third aspect, in a tenth possible implementation, the resource parameter includes a quantity of UEs that perform sending and/or an occupancy rate of a second resource pool, and the second resource pool is a resource pool corresponding to a second priority; and the processor is configured to: when the priority of the to-be-sent message is the second priority, select the second resource pool and a transmission mode if the quantity of the UEs that perform sending exceeds a seventh threshold and/or the occupancy rate of the second resource pool exceeds an eighth threshold, where the transmission mode is a long period mode, an interval mode, or a switch mode.

With reference to the third aspect, in an eleventh possible implementation, the resource parameter includes a size of the to-be-sent message and/or a quantity of UEs that perform sending; and the processor is configured to: when the priority of the to-be-sent message is a first priority, select a common resource pool if the size of the to-be-sent message exceeds a ninth threshold and/or the quantity of the user equipments UEs that perform sending exceeds a tenth threshold.

With reference to the third aspect, in a twelfth possible implementation, the resource parameter includes a parameter of a buffer status of UE that is to send the to-be-sent message and/or an occupancy rate of a first resource pool, and the first resource pool is a resource pool corresponding to a first priority; and the processor is configured to: when the priority of the to-be-sent message is the first priority, select a common resource pool if a buffer of the UE that is to send the to-be-sent message is in a busy state and/or the occupancy rate of the first resource pool exceeds an eleventh threshold.

With reference to the third aspect, in a thirteenth possible implementation, the resource parameter includes an occupancy rate of a common resource pool; and the processor is configured to: when the priority of the to-be-sent message is a first priority, select the common resource pool if the occupancy rate of the common resource pool exceeds a twelfth threshold.

With reference to any one of the eleventh possible implementation of the third aspect, the twelfth possible implementation of the third aspect, or the thirteenth possible implementation of the third aspect, in a fourteenth possible implementation, the method further includes a second sending module, where the second sending module is configured to send resource preemption indication information and the to-be-sent message by using the common resource pool; or the first sending module is configured to send the to-be-sent message by using the common resource pool and by using a second predefined transmit power, where the second predefined transmit power is higher than a predefined transmit power corresponding to the common resource pool, and the to-be-sent message carries a message type of the to-be-sent message.

With reference to the third aspect, in a fifteenth possible implementation, the resource parameter includes an occupancy rate of a first resource pool, and the first resource pool is a resource pool corresponding to a first priority; and the processor is configured to: when the priority of the to-be-sent message is a second priority, select a common resource pool and a transmission mode if the occupancy rate of the first resource pool exceeds a thirteenth threshold, where the transmission mode is a long period mode, an interval mode, or a switch mode, and the first priority is higher than the second priority.

With reference to the third aspect, in a sixteenth possible implementation, the resource parameter includes a quantity of UEs that perform sending; and the processor is configured to: when the priority of the to-be-sent message is a second priority, select a common resource pool and a transmission mode if the quantity of the UEs that perform sending exceeds a fourteenth threshold, where the transmission mode is a long period mode, an interval mode, or a switch mode.

With reference to the third aspect, in a seventeenth possible implementation, the resource parameter includes an occupancy rate of a common resource pool and/or whether there is a case in which a message of a first priority occupies the common resource pool; and the processor is configured to: when the priority of the to-be-sent message is a second priority, select the common resource pool and a transmission mode if the occupancy rate of the common resource pool exceeds a fifteenth threshold and/or there is the case in which the message of the first priority occupies the common resource pool, where the transmission mode is a long period mode, an interval mode, or a switch mode, and the first priority is higher than the second priority.

With reference to the third aspect, in an eighteenth possible implementation, the resource parameter includes a first parameter that indicates whether a second resource can be preempted for sending a message of a first priority and a second parameter that indicates whether there is a resource requirement for sending the message of the first priority, where the second resource is a resource selected for sending a message of a second priority, and the first priority is higher than the second priority; and the processor is configured to: when the priority of the to-be-sent message is the second priority, if the first parameter indicates that the second resource can be preempted, and the second parameter indicates that there is a resource requirement for sending the message of the first priority, skip selecting the second resource as a resource for sending the to-be-sent message.

With reference to the eighteenth possible implementation of the third aspect, in a nineteenth possible implementation, the first parameter includes a second value generated by UE that is to send the message of the second priority, and when the second value meets a preset condition, the first parameter indicates that the second resource can be preempted.

With reference to the nineteenth possible implementation of the third aspect, in a twentieth possible implementation, the UE that is to send the message of the second priority determines that a third resource can be preempted, the third resource is a resource selected for sending a message of a third priority, and the third priority is not higher than the second priority.

Based on the foregoing technical solutions, according to the message transmission method and the UE in the embodiments of the present invention, a to-be-occupied resource is selected according to the priority of the to-be-sent message and the resource parameter, and a resource may be flexibly selected according to different resource parameters. Therefore, resource utilization can be improved, a waste of resources can be avoided, and user experience can be improved.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic diagram of a scenario to which an embodiment of the present invention can be applied;
FIG. 2 is a schematic flowchart of a message transmission method according to an embodiment of the present invention;
FIG. 3 is a schematic diagram of a dynamic change of a resource pool;
FIG. 4 is another schematic diagram of a dynamic change of a resource pool;
FIG. 5 is a schematic block diagram of user equipment according to an embodiment of the present invention; and
FIG. 6 is a schematic structural diagram of user equipment according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

The technical solutions of the present invention may be applied to various communications systems, such as: a Global System for Mobile Communications (GSM, Global System of Mobile communication), a Code Division Multiple Access (CDMA, Code Division Multiple Access) system, a Wideband Code Division Multiple Access (WCDMA, Wideband Code Division Multiple Access Wireless) system, a general packet radio service (GPRS, General Packet Radio Service) system, and a Long Term Evolution (LTE, Long Term Evolution) system.

User equipment (UE, User Equipment), also referred to as a mobile terminal (Mobile Terminal), mobile user equipment, and the like, may communicate with one or more core networks over a radio access network (for example, RAN, Radio Access Network). The user equipment may be a mobile terminal, such as a mobile phone (or referred to as a "cellular" phone) and a computer with a mobile terminal. For example, the user equipment may be a portable, pocket-sized, handheld, computer built-in, or in-vehicle mobile apparatus, which exchanges language and/or data with the radio access network.

A base station may be a base station (BTS, Base Transceiver Station) in GSM or CDMA, or may be a base station (NodeB) in WCDMA, or may be an evolved NodeB (eNB or e-NodeB, evolutional Node B) in LTE. This is not limited in the present invention. However, for ease of description, the following embodiments are described by using a NodeB as an example.

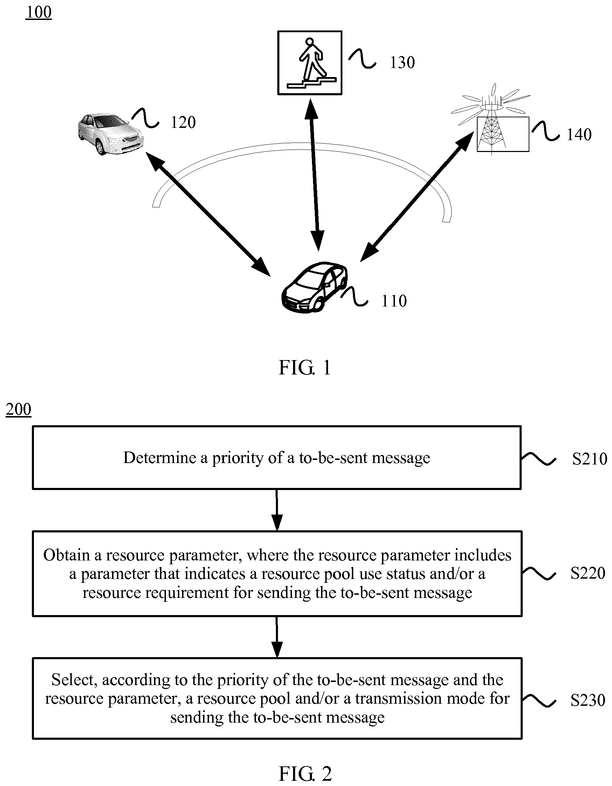

FIG. 1 is a schematic diagram of a scenario to which an embodiment of the present invention can be applied. It should be noted that an example in FIG. 1 is intended to help a person skilled in the art better understand this embodiment of the present invention, instead of limiting the scope of this embodiment of the present invention.

Vehicle to vehicle (Vehicle to Vehicle, "V2V" for short) communication, vehicle-to-pedestrian (Vehicle to Pedestrian, "V2P" for short) communication, and vehicle to infrastructure (Vehicle to Infrastructure, "V2I" for short) communication are collectively referred to as V2X (Vehicle to Everything, "V2X" for short) communication. Main application scenarios of the present invention are a D2D scenario in Long Term Evolution Advanced (Long Term Evolution-Advanced, "LTE-A" for short) system Rel-12/13 (Release 12/13, "Rel-12/13" for short) and a V2X scenario in LTE-A Rel-14 (Release 14, "Rel-14" for short). In FIG. 1, a vehicle 110, a vehicle 120, a pedestrian 130, and an infrastructure 140 all have a D2D capability, and D2D communication may be performed among the vehicle 110, the vehicle 120, the pedestrian 130, and the infrastructure 140. V2V means that communication may be performed between the vehicle 110 and the vehicle 120. V2P means that communication may be performed between the vehicle 110 and the pedestrian 130. V2I means that communication may be performed between the vehicle 110 and the infrastructure 140. In D2D communication, if a resource pool includes a block of resources allocated by a base station in a network coverage scenario, all D2D users contend for a resource in the block of resources, so as to transmit data on the resource; in a scenario in which there is no network coverage, if a resource pool is predefined system bandwidth that can be obtained by a D2D user, all D2D users contend for a resource in a predefined resource.

In Rel-14, a V2X technology is successfully projected as a main application of a D2D technology. A specific application of V2X needs to be optimized based on the D2D technology, and one optimization requirement is that a resource conflict in V2X communication needs to be reduced, so as to improve resource utilization.

It should be understood that for ease of description, only communication between a single vehicle and a vehicle, communication between a single pedestrian and a vehicle, and communication between a single vehicle and an infrastructure are described in FIG. 1, but the present invention is not limited thereto. For example, in an Internet of Vehicles system, there may be a larger quantity of vehicles. This is not limited in the present invention.

FIG. 2 is a schematic flowchart of a message transmission method 200 according to an embodiment of the present invention. The method in FIG. 2 is executed by UE. As shown in FIG. 2, the method 200 includes the following steps:

S210. Determine a priority of a to-be-sent message.

S220. Obtain a resource parameter, where the resource parameter includes a parameter that indicates a resource pool use status and/or a resource requirement for sending the to-be-sent message.

S230. Select, according to the priority of the to-be-sent message and the resource parameter, a resource pool and/or a transmission mode for sending the to-be-sent message.

Specifically, the UE determines the priority of the to-be-sent message. For example, the priority of the to-be-sent message may be obtained by means of division performed according to a priority of a communications service, or may be obtained by means of division performed in another manner. For example, a real-time request service that is to be downloaded by a user and an emergency service may be classified as high-priority services. Then, the UE may detect the parameter of the resource pool use status and/or the parameter of the resource request for sending the to-be-sent message, and may select, according to parameter information, a proper resource pool and/or transmission mode for sending the to-be-sent message, so as to obtain a spectrum resource for information transmission.

In this embodiment of the present invention, the resource parameter may include the parameter that indicates the resource pool use status, or may include the parameter of the resource requirement for sending the to-be-sent message, or may include both the parameter that indicates the resource pool use status and the parameter of the resource requirement for sending the to-be-sent message. For example, the parameter of the resource pool use status may include an occupancy rate parameter of each resource pool, and the like; and the parameter of the resource requirement for sending the to-be-sent message may include a size parameter of the to-be-sent message packet, and the like. This is not limited in the present invention.

In S230, the UE selects, according to the priority of the to-be-sent message and the resource parameter, the resource pool and/or the transmission mode for sending the to-be-sent message. The resource pool may be a resource pool obtained by means of division according to different priorities of communications services. For example, a base station may divide resource pools into a high-priority resource pool and a low-priority resource pool. In various embodiments of the present invention, a first priority and a second priority are used as an example for description. The first priority is higher than the second priority, but this is not limited in the present invention. For example, a larger priority index may indicate a higher priority; or a smaller priority index may indicate a higher priority.

It should be understood that in S230, the UE selects, according to the priority of the to-be-sent message and the resource parameter, the resource pool and/or the transmission mode for sending the to-be-sent message. The resource pool may obtained by means of division by the base station, or may be a predefined system bandwidth resource obtained by a D2D user. This is not limited in the present invention.

Therefore, according to the message transmission method in this embodiment of the present invention, a to-be-occupied resource is selected according to the priority of the to-be-sent message and the resource parameter, and a resource may be flexibly selected according to different resource parameters. Therefore, resource utilization can be improved, a waste of resources can be avoided, and user experience can be improved.

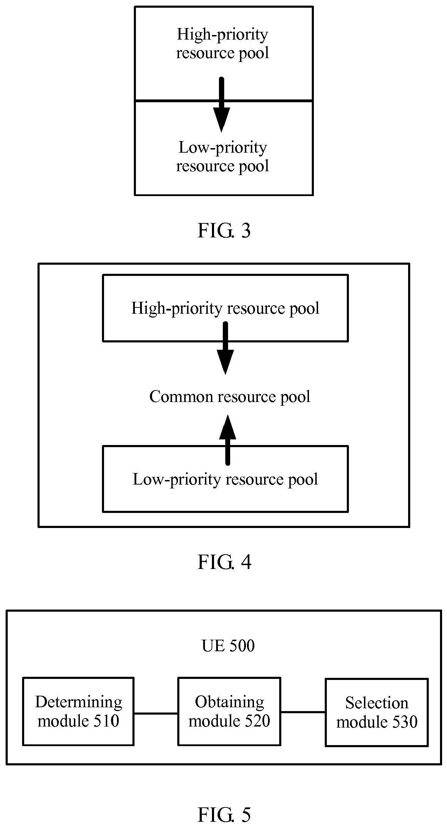

In S230, the resource pool and/or the transmission mode for sending the to-be-sent message are/is selected according to the priority of the to-be-sent message and the resource parameter. Resource pools may have two dynamic change forms. One change form of the resource pools is shown in FIG. 3. The base station may divide spectrum resources into a high-priority resource pool and a low-priority resource pool according to a priority of a communications service. High-priority UE may select a low-priority resource pool according to a resource parameter change to send the to-be-sent message. Another change form of the resource pools is shown in FIG. 4. Different from FIG. 3, a common resource pool is added. The common resource pool represents a resource pool shared by services of various priorities. A high-priority service and a low-priority service and services of priorities corresponding to indices of various levels may send a message in the common resource pool.

The following specifically describes a manner in which the resource pool and/or the transmission mode for sending the to-be-sent message are/is selected according to the priority of the to-be-sent message and the resource parameter. First, the manner in which the resource pool and/or the transmission mode for sending the to-be-sent message are/is selected according to the priority of the to-be-sent message and the resource parameter is specifically described in this embodiment of the present invention on the premise of a resource pool division manner shown in FIG. 3.

Optionally, in an embodiment of the present invention, the resource parameter may include:
a size of the to-be-sent message and/or a quantity of user equipments UEs that perform sending; and
S230 may include:
   when the priority of the to-be-sent message is a first priority, selecting a second resource pool if the size of the to-be-sent message exceeds a first threshold and/or the quantity of the UEs that perform sending exceeds a second threshold, where the second resource pool is a resource pool corresponding to a second priority, and the first priority is higher than the second priority.

In this embodiment of the present invention, the first priority may be a high priority, and the second priority may be a low priority. Correspondingly, a first resource pool may be a high-priority resource pool, and the second resource pool may be a low-priority resource pool. The first resource parameter may include the size of the to-be-sent message and/or the quantity of the UEs that perform sending. The size of the to-be-sent message may be measured by using a packet distribution rate (Packet Discard Rate, "PDR" for short) value. Alternatively, a size of a data packet may be represented in another manner. This is not limited.

Specifically, when the priority of the to-be-sent message is the first priority, and for example the first priority is a high priority, if there are no enough available resources in the high-priority resource pool because UE that is to send the to-be-sent message detects that a data packet of the to-be-sent message is relatively large, for example, greater than the first threshold, and the quantity of the UEs that perform sending is relatively large, for example, greater than the second threshold, or only detects that a quantity of UEs that are send the to-be-sent message is relatively large, or only detects that a data packet of the to-be-sent message is relatively large, the low-priority resource pool is selected. For example, resource preemption indication information may be sent to the low-priority resource pool, so as to send the to-be-sent message in the low-priority resource pool. Both the first threshold and the second threshold may be preset.

Optionally, in an embodiment of the present invention, the resource parameter includes a quantity of UEs that perform sending and/or a parameter of a buffer status of UE that is to send the to-be-sent message; and
S230 may include:
when the priority of the to-be-sent message is a first priority, selecting a second resource pool if a buffer of the UE that is to send the to-be-sent message is in a busy state and/or the quantity of the UEs that perform sending exceeds a third threshold, where the second resource pool is a resource pool corresponding to a second priority, and the first priority is higher than the second priority.

Specifically, when the priority of the to-be-sent message is the first priority, and the first priority is a high priority, if the UE that is to send the to-be-sent message detects that the buffer of the UE that is to send the to-be-sent message is always in the busy state, and detects that the quantity of the UEs that perform sending is particularly large, or only detects that the quantity of the UEs that perform sending is relatively large, for example, the quantity is greater than the third threshold, or only detects that the buffer of the UE that is to send the to-be-sent message is always in the busy state, the UE that is to send the to-be-sent message may select the second resource pool to send a high-priority message of the UE. For example, the second resource pool may be a low-priority resource pool. The third threshold may be preset or predefined.

Optionally, in an embodiment of the present invention, the resource parameter may include an occupancy rate of a first resource pool and/or an occupancy rate of a second resource pool, the first resource pool is a resource pool corresponding to the first priority, the second resource pool is a resource pool corresponding to a second priority, and the first priority is higher than the second priority; and
S230 may include:
when the priority of the to-be-sent message is the first priority, selecting the second resource pool if the occupancy rate of the first resource pool exceeds a fourth threshold and/or the occupancy rate of the second resource pool exceeds a fifth threshold.

Specifically, when the priority of the to-be-sent message is the first priority, and the first priority is a high priority, if UE that is to send the to-be-sent message detects that an occupancy rate of a resource pool of the first priority is relatively high, for example, the resource pool of the first priority is a high-priority resource pool, and the occupancy rate of the high-priority resource pool exceeds a specific threshold, for example, exceeds the fourth threshold, or only detects that an occupancy rate of a resource pool of the second priority is relatively high, for example, the resource pool of the second priority is a low-priority resource pool, and the occupancy rate of the low-priority resource pool exceeds a specific threshold, for example, exceeds the fifth threshold, the UE that is to send the to-be-sent message may select the second resource pool to send the to-be-sent message, for example, select the low-priority resource pool to send the to-be-sent high-priority message. The fourth threshold and the fifth threshold may be preset.

Optionally, after the resource pool of the second priority is selected, the method may further include:
sending resource preemption indication information and the to-be-sent message by using the second resource pool; or
sending the to-be-sent message by using the second resource pool and by using a first predefined transmit power, where the first predefined transmit power is higher than a predefined transmit power corresponding to the second resource pool, and the to-be-sent message carries a message type of the to-be-sent message.

Specifically, when the priority of the to-be-sent message is the first priority, and the to-be-sent message is a high-priority message, when the UE that is to send the to-be-sent message detects that one or more resource parameters exceed or meet a specific threshold, the resource preemption indication information may be sent by using the resource pool of the second priority. For example, the resource pool of the second priority is a low-priority resource pool, the resource preemption indication information is sent by using the low-priority resource pool, and the resource preemption indication information may be carried by using scheduling assignment (Scheduling Assignment, "SA" for short) information. In this way, the UE that is to send the to-be-sent message may preempt a resource in the low-priority resource pool, and after the resource preemption indication information is sent, the to-be-sent message or a to-be-sent service may be sent by using the low-priority resource pool. In addition, the UE that is to send the to-be-sent message may send the to-be-sent message by using the first predefined transmit power. The first predefined transmit power is higher than the predefined transmit power corresponding to the second resource pool. The to-be-sent message carries the message type of the to-be-sent message. For example, the UE that is to send the to-be-sent message sends, by using a higher transmit power, a to-be-sent message that carries an emergency identifier, so as to preempt a resource in the low-priority resource pool to send data. The higher transmit power herein is higher than the transmit power corresponding to the low-priority resource pool.

In this embodiment of the present invention, the resource preemption indication information may be carried by using the SA information. The resource preemption indication information is used to notify UE that uses the low-priority resource pool that the to-be-sent high-priority message is to be sent in the low-priority resource pool, so that low-priority UE does not send a message in the low-priority resource pool temporarily or delays sending a message, so as to ensure that there are enough resources available for the high-priority message.

In this embodiment of the present invention, the transmit power corresponding to the second resource pool may be a transmit power in a normal situation. The first predefined transmit power may be higher than the transmit power corresponding to the second resource pool. The first predefined transmit power is used as a transmit power, so that the UE that uses the low-priority resource pool can know that the high-priority message is to occupy the low-priority resource pool for message transmission. In addition, the to-be-sent message may carry the message type of the to-be-sent message. For example, the UE that is to send the to-be-sent message may use one bit to mark a type of the to-be-sent message as an emergency service, so that the low-priority UE makes way for UE that is to send the high-priority message, so as to ensure that there are enough resources available for the high-priority message.

It should be understood that in this embodiment of the present invention, only these two specific manners in which the to-be-sent message is sent by using the second resource pool are used as an example for description. There may be another proper manner as long as there are enough resources available for the high-priority message. This is not limited in the present invention.

It should be further understood that in this embodiment of the present invention, the resource preemption indication information may be indicated in the SA information, or the resource preemption indication information may be carried or indicated in another manner. This is not limited in the present invention.

It should be further understood that in this embodiment of the present invention, the size of the to-be-sent message may be measured by using the PDR value, or the size of the data packet may be measured by using another manner, for example, using a size of an occupied memory or another manner. This is not limited in the present invention.

It should be further understood that an occupancy rate of a resource pool in this embodiment of the present invention may be measured by using a reference signal received power (Reference Signal Receiving Power, "RSRP" for short) value, or an occupancy rate of a resource pool may be measured in another manner. This is not limited in the present invention.

Therefore, according to the message transmission method in this embodiment of the present invention, a to-be-occupied resource is selected according to the priority of the to-be-sent message and the resource parameter, and a resource may be flexibly selected according to different resource parameters. Therefore, resource utilization can be improved, a waste of resources can be avoided, and further, it can be ensured that there are enough resources available for sending a high-priority message, thereby improving user experience.

Optionally, in an embodiment of the present invention, the resource parameter may be used to indicate whether a second resource can be preempted for sending a message of a first priority, where the second resource is a resource selected for sending a message of a second priority, and the first priority is higher than the second priority; and
S230 may include:
when the priority of the to-be-sent message is the first priority, if the resource parameter indicates that the second resource can be preempted, selecting the second resource as a resource for sending the to-be-sent message.

Specifically, when the priority of the to-be-sent message is a high priority, a resource parameter is detected. The resource parameter is used to indicate whether UE that is to send the message of the first priority can preempt the second resource in this case. The second resource is a resource selected and/or occupied by low-priority UE or for sending a low-priority message. When the resource parameter indicates that the second resource may be preempted, the second resource is occupied. In this way, without affecting a high-priority message, it is further ensured that there is a resource available for UE that is to send some low-priority messages that occupy a small resource. For example, if a resource is preempted for sending the high-priority message, only some resources rather than all resources need to be occupied, and if all low-priority UEs or low-priority messages stop using a resource pool or sending a resource is delayed, a waste of resources is inevitably caused. An excessively absolute or arbitrary solution is not conducive to resource saving.

Optionally, in this embodiment of the present invention, the resource parameter includes a first value generated by UE that is to send the message of the second priority, and when the first value meets a preset condition, the resource parameter indicates that the second resource can be preempted.

Specifically, the low-priority UE generates a value. When the value meets a specific threshold condition, the UE that is to send the to-be-sent message may preempt a resource for the low-priority UE and/or the low-priority message and use the resource as a resource of the to-be-sent message. The value is used to indicate an occupancy situation of the low-priority resource. For example, the low-priority UE generates a value n. When n is greater than a specific threshold, the resource parameter is used to indicate that the UE that is to send the to-be-sent message may preempt the low-priority resource. When n is less than a specific threshold, the resource parameter is used to indicate that the UE that is to send the to-be-sent message may not preempt the low-priority resource. This can ensure that a small part of resources are available for a low-priority service. Threshold selection may be flexibly defined or configured in a system, and is not limited.

Optionally, the UE that is to send the message of the second priority determines that a third resource can be preempted, the third resource is a resource selected for sending a message of a third priority, and the third priority is not higher than the second priority.

Specifically, before the resource parameter indicates that the second resource is preempted, the UE of the second priority may determine whether the third resource can be preempted. For example, the second priority is a low priority, and the third priority is a priority lower than the low priority. The third resource may be a resource corresponding to the third priority. Priority division herein is unnecessarily performed according to a priority order from high to low, and a first priority, a second priority, a third priority, or more priorities may be obtained by means of division. It should be ensured that the method in this embodiment of the present invention can be used for services or messages of various priorities.

Optionally, in an embodiment of the present invention, the resource parameter may include an occupancy rate of a first resource pool, and the first resource pool is a resource pool corresponding to a first priority; and S230 may include:
when the priority of the to-be-sent message is a second priority, selecting a second resource pool and a transmission mode if the occupancy rate of the first resource pool exceeds a sixth threshold, where the transmission mode is a long period mode, an interval mode, or a switch mode, the second resource pool is a resource pool corresponding to the second priority, and the first priority is higher than the second priority.

Specifically, when the priority of the to-be-sent message is a low priority, if UE that is to send the to-be-sent message detects that an occupancy rate of a high-priority resource pool is relatively high and exceeds the sixth threshold, and the sixth threshold is a specified threshold, the UE that is to send the to-be-sent message selects the second resource pool. For example, low-priority UE selects a low-priority resource pool to send the to-be-sent message, and the transmission mode is a long period mode, an interval mode, or a switch mode. The long period mode means that a longer period is selected to perform sending, and the interval mode or the switch mode is a mode preset according to time. These three transmission modes are all used to delay sending a low-priority message, so as to make way for a high-priority message, and ensure that there are enough resources available for the high-priority message. The present invention is not limited to the three transmission modes.

Optionally, in an embodiment of the present invention, the resource parameter may be used to indicate whether there is a case in which a message of a first priority occupies a second resource pool, the second resource pool is a resource pool corresponding to a second priority, and the first priority is higher than the second priority; and
S230 may include:
when the priority of the to-be-sent message is the second priority, selecting the second resource pool and a transmission mode if there is the case in which the message of the first priority occupies the second resource pool, where the transmission mode is a long period mode, an interval mode, or a switch mode.

Specifically, when the priority of the to-be-sent message is a low priority, if UE that is to send the to-be-sent message detects that there is a case in which a high-priority message or service occupies a local low-priority resource pool, the UE that is to send the to-be-sent message selects the second resource pool to send the to-be-sent message, for example, selects the low-priority resource pool to send the to-be-sent message. The transmission mode is a long period mode, an interval mode, or a switch mode. Functions of the three modes are the same as those described above, and are not described again.

Optionally, in an embodiment of the present invention, the resource parameter may include a quantity of UEs that perform sending and/or an occupancy rate of a second resource pool, and the second resource pool is a resource pool corresponding to a second priority; and
S230 may include:
when the priority of the to-be-sent message is the second priority, selecting the second resource pool and a transmission mode if the quantity of the UEs that perform sending exceeds a seventh threshold and/or the occupancy rate of the second resource pool exceeds an eighth threshold, where the transmission mode is a long period mode, an interval mode, or a switch mode.

Specifically, when the priority of the to-be-sent message is a low priority, if UE that is to send the to-be-sent message detects that the quantity of the UEs that perform sending is relatively large and greater than the seventh threshold, where the seventh threshold may be a predefined threshold, or detects that an occupancy rate of a low-priority resource pool is relatively high and greater than the eighth threshold, where the eighth threshold may be a predefined threshold, or detects that a quantity of UEs that are to send the to-be-sent message is relatively large and an occupancy rate of a low-priority resource pool is relatively high, the UE that is to send the to-be-sent message selects the second resource pool to send the to-be-sent message, for example, selects the low-priority resource pool to send the to-be-sent message. The transmission mode is a long period mode, an interval mode, or a switch mode. Functions of the three modes are the same as those described above, and are not described again.

In this embodiment of the present invention, for example when the UE that is to send the to-be-sent message is low-priority UE, when the UE that is to send the to-be-sent message detects that one or more parameters exceed or meet a specific threshold, the to-be-sent message or to-be-sent data may be sent by selecting a longer period or may be sent after a time period, so as to free more resources for a high-priority message. Alternatively, the to-be-sent message may be sent by using the interval mode or the switch mode. These manners are used to reserve more resources, so that data or a service of a high-priority message can be transmitted in the low-priority resource pool.

It should be understood that in the present invention, the interval mode or the switch mode is only used as an example, and another proper mode may also be used. This imposes no limitation on the present invention.

Therefore, according to the message transmission method in this embodiment of the present invention, a to-be-occupied resource is selected according to the priority of the to-be-sent message and the resource parameter, and a resource may be flexibly selected according to different resource parameters. Therefore, resource utilization can be improved, a waste of resources can be avoided, and further, it can be ensured that there are enough resources available for sending a high-priority message, thereby improving user experience.

The manner in which the resource pool and/or the transmission mode for sending the to-be-sent message are/is selected according to the priority of the to-be-sent message and the resource parameter in this embodiment of the present invention is specifically described below with reference to a resource pool division manner shown in FIG. 4.

In S230, a second implementation in which the resource pool and/or the transmission mode for sending the to-be-sent message are/is selected according to the priority of the to-be-sent message and the resource parameter is shown in FIG. 4. The following specifically describes this implementation in which the UE selects, according to the priority of the to-be-sent message and the resource parameter, the resource pool and/or the transmission mode for sending the to-be-sent message.

Optionally, in an embodiment of the present invention, the resource parameter may include a size of the to-be-sent message and/or a quantity of user equipments UEs that perform sending; and
S230 may include:
when the priority of the to-be-sent message is a first priority, selecting a common resource pool if the size of the to-be-sent message exceeds a ninth threshold and/or the quantity of the user equipments UEs that perform sending exceeds a tenth threshold.

Specifically, when the priority of the to-be-sent message is a high priority, if there are no enough available resources in a high-priority resource pool because UE that is to send the to-be-sent message detects that a data packet of the to-be-sent message is relatively large and greater than the ninth threshold, and the quantity of the UEs that perform sending is relatively large and greater than the tenth threshold, or only detects that a quantity of UEs that are to send the to-be-sent message is relatively large, or only detects that a data packet of the to-be-sent message is relatively large, the common resource pool may be selected to send resource preemption indication information, so as to send the to-be-sent message in the common resource pool. Both the ninth threshold and the tenth threshold may be preset.

Optionally, in an embodiment of the present invention, the resource parameter may include a parameter of a buffer status of UE that is to send the to-be-sent message and/or an occupancy rate of a first resource pool, and the first resource pool is a resource pool corresponding to a first priority; and
S230 may include:
when the priority of the to-be-sent message is the first priority, selecting a common resource pool if a buffer of the UE that is to send the to-be-sent message is in a busy state and/or the occupancy rate of the first resource pool exceeds an eleventh threshold.

Specifically, when the priority of the to-be-sent message is a high priority, if UE that is to send the to-be-sent message detects that the buffer of the UE that is to send the to-be-sent message is always in a busy state, and detects that an occupancy rate of a high-priority resource pool is relatively high, or only detects that the buffer of the UE that is to send the to-be-sent message is always in a busy state, or only detects that an occupancy rate of a high-priority resource pool is relatively high and greater than a specific threshold, the UE that is to send the to-be-sent message may select the common resource pool to send a high-priority message of the UE.

Optionally, in an embodiment of the present invention, the resource parameter may include an occupancy rate of a common resource pool; and
S230 may include:
when the priority of the to-be-sent message is a first priority, selecting the common resource pool if the occupancy rate of the common resource pool exceeds a twelfth threshold.

Specifically, when the priority of the to-be-sent message is a high priority, if UE that is to send the to-be-sent message detects that the occupancy rate of the common resource pool is relatively high and exceeds the twelfth threshold, where the twelfth threshold may be a preset specific threshold, the UE that is to send the to-be-sent message may select the common resource pool to send a high-priority message.

Optionally, after the common resource pool is selected, the method may further include:
sending resource preemption indication information and the to-be-sent message by using the common resource pool; or
sending the to-be-sent message by using the common resource pool and by using a second predefined transmit power, where the first predefined transmit power is higher than a predefined transmit power corresponding to the common resource pool, and the to-be-sent message carries a message type of the to-be-sent message.

Specifically, when the UE that is to send the to-be-sent message is high-priority UE, when the UE that is to send the to-be-sent message detects that one or more parameters exceed or meet a specific threshold, resource preemption indication information may be sent by using the common resource pool. The resource preemption indication information may be carried in the SA information, so that an available resource is preempted in a low-priority resource pool, and an available resource is preempted in the common resource pool. After the resource preemption indication information is sent, the to-be-sent message or a to-be-sent service may be sent by using the common resource pool. Alternatively, the to-be-sent message that carries an emergency identifier may be sent by using a higher transmit power, so as to send data in the common resource pool. The higher transmit power herein is a transmit power higher than the predefined transmit power corresponding to the common resource pool.

Therefore, according to the message transmission method in this embodiment of the present invention, a to-be-occupied resource is selected according to the priority of the to-be-sent message and the resource parameter, and a resource may be flexibly selected according to different resource parameters. Therefore, resource utilization can be improved, a waste of resources can be avoided, and further, it can be ensured that there are enough resources available for sending the high-priority message, thereby improving user experience.

Optionally, in an embodiment of the present invention, the resource parameter may include an occupancy rate of a first resource pool, and the first resource pool is a resource pool corresponding to a first priority; and
S230 may include:
when the priority of the to-be-sent message is a second priority, selecting a common resource pool and a transmission mode if the occupancy rate of the first resource pool exceeds a thirteenth threshold, where the transmission mode is a long period mode, an interval mode, or a switch mode, and the first priority is higher than the second priority.

Specifically, when the priority of the to-be-sent message is a low priority, if UE that is to send the to-be-sent message detects that an occupancy rate of a high-priority resource pool is relatively high and exceeds a specific threshold, for example, exceeds the thirteenth threshold, the UE that is to send the to-be-sent message selects the common resource pool and the transmission mode to send the to-be-sent message, where the transmission mode is a long period mode, an interval mode, or a switch mode. The thirteenth threshold may be preset.

Optionally, in an embodiment of the present invention, the resource parameter may include a quantity of UEs that perform sending; and
S230 may include:
when the priority of the to-be-sent message is a second priority, selecting a common resource pool and a transmission mode if the quantity of the UEs that perform sending exceeds a fourteenth threshold, where the transmission mode is a long period mode, an interval mode, or a switch mode.

Specifically, when the priority of the to-be-sent message is a low priority, if UE that is to send the to-be-sent message detects that a quantity of UEs that perform sending is relatively large, the quantity exceeds the fourteenth threshold, and the fourteenth threshold may be a preset threshold, the UE that is to send the to-be-sent message selects the common resource pool and the transmission mode, where the transmission mode is a long period mode, an interval mode, or a switch mode.

Optionally, in an embodiment of the present invention, the resource parameter may include an occupancy rate of a common resource pool and/or whether there is a case in which a message of a first priority occupies the common resource pool; and
S230 may include:
when the priority of the to-be-sent message is a second priority, selecting the common resource pool and a transmission mode if the occupancy rate of the common resource pool exceeds a fifteenth threshold and/or there is the case in which the message of the first priority occupies the common resource pool, where the transmission mode is a long period mode, an interval mode, or a switch mode, and the first priority is higher than the second priority.

Specifically, when the priority of the to-be-sent message is a low priority, if UE that is to send the to-be-sent message detects that there is a case in which a high-priority message occupies the common resource pool, the occupancy rate of the common resource pool is relatively high and greater than a specific threshold, for example, greater than the fifteenth threshold, and the fifteenth threshold may be preset, or only detects that there is a high-priority message in the common resource pool, or only detects that the occupancy rate of the common resource pool is relatively high, the UE that is to send the to-be-sent message selects the common resource pool and the transmission mode, where the transmission mode is a long period mode, an interval mode, or a switch mode.

In this embodiment of the present invention, when the UE that is to send the to-be-sent message is low-priority UE, when the UE that is to send the to-be-sent message detects that one or more parameters exceed or meet a specific threshold, the to-be-sent message or to-be-sent data may be sent by selecting a longer period or may be sent after a time period, so as to free more resources for the high-priority message. Alternatively, the to-be-sent message may be sent by using the interval mode or the switch mode. These manners are used to reserve more resources, so that data or a service of the high-priority message can be transmitted in the common resource pool.

It should be understood that in the present invention, the interval mode or the switch mode is only used as an example, and another proper mode may also be used. For example, UE of a low-priority message stops using the common resource pool, so as to free more resources for UE that is to send the high-priority message. This is not limited in the present invention.

Optionally, in an embodiment of the present invention, the resource parameter may include a first parameter that indicates whether a second resource can be preempted for sending a message of a first priority and a second parameter that indicates whether there is a resource requirement for sending the message of the first priority, where the second resource is a resource selected for sending a message of a second priority, and the first priority is higher than the second priority; and
S230 may include:
when the priority of the to-be-sent message is the second priority, if the first parameter indicates that the second resource can be preempted, and the second parameter indicates that there is a resource requirement for sending the message of the first priority, skipping selecting the second resource as a resource for sending the to-be-sent message.

Specifically, when the to-be-sent message is a message of the second priority, and the second priority is a low priority, UE that is to send the low-priority message obtains the resource parameter. The resource parameter may include the first parameter and the second parameter. The first parameter may be used to indicate whether the second resource can be preempted for sending the message of the first priority, and the second parameter indicates whether there is a resource requirement for sending the message of the first priority. The first priority is not lower than the second priority. For example, the first priority is a high priority, the second priority is a low priority, and the second resource is a resource selected for sending the low-priority message. When the first parameter indicates that the second resource, that is, the resource selected for sending the low-priority message, can be preempted for sending the high-priority message, and the second parameter indicates that there is a resource requirement for sending the low-priority resource, the UE that is to send the to-be-sent message does not select the second resource as a resource in a resource pool for sending the to-be-sent message.

Optionally, in this embodiment of the present invention, the first parameter may include a second value generated by UE that is to send the message of the second priority, and when the second value meets a preset condition, the first parameter indicates that the second resource can be preempted.

Specifically, for example, the UE that is to send the message of the second priority generates a second value m. When the value m meets a specific threshold condition, for example, is greater than a preset threshold, the resource parameter indicates that the second resource may be preempted; or when the value m is less than a preset threshold, the resource parameter indicates that the second resource cannot be preempted. The threshold may be configured in a system or predefined.

Optionally, in an embodiment of the present invention, the UE that is to send the message of the second priority may determine that a third resource can be preempted, the third resource is a resource selected for sending a message of a third priority, and the third priority is not higher than the second priority.

Before the resource parameter indicates that the second resource can be preempted, the UE of the second priority determines whether the third resource can be preempted. The third resource is a resource selected for sending the message of the third priority. The third priority is a priority that is not higher than the second priority. The description herein is to indicate that UE that is to send at least one type of low-priority message in a network claims that a resource used by the UE may be preempted.

Therefore, according to the message transmission method in this embodiment of the present invention, a to-be-occupied resource is selected according to the priority of the to-be-sent message and the resource parameter, and a resource may be flexibly selected according to different resource parameters. Therefore, resource utilization can be improved, a waste of resources can be avoided, and further, it can be ensured that there are enough resources available for sending a high-priority message, thereby improving user experience.

It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

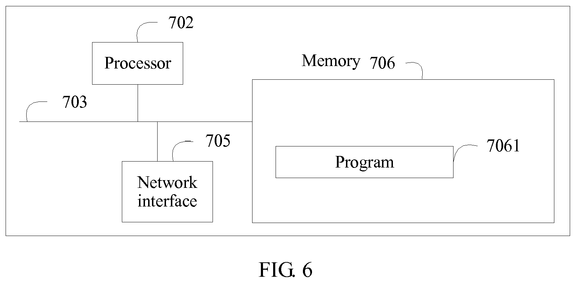

The foregoing describes in detail the message transmission method according to the embodiments of the present invention with reference to FIG. 1 to FIG. 4, and the following describes UE according to the embodiments of the present invention with reference to FIG. 5 and FIG. 6.

FIG. 5 shows a schematic block diagram of UE 500 according to an embodiment of the present invention. As shown in FIG. 5, the UE 500 includes:
a determining module 510, configured to determine a priority of a to-be-sent message;
an obtaining module 520, configured to obtain a resource parameter, where the resource parameter includes a parameter that indicates a resource pool use status and/or a resource requirement for sending the to-be-sent message; and
a selection module 530, configured to select, according to the priority that is of the to-be-sent message and that is determined by the determining module and the resource parameter obtained by the obtaining module, a resource pool and/or a transmission mode for sending the to-be-sent message.

Therefore, according to the UE in this embodiment of the present invention, a to-be-occupied resource is selected according to the priority of the to-be-sent message and the resource parameter, and a resource may be flexibly selected according to different resource parameters. Therefore, resource utilization can be improved, a waste of resources can be avoided, and user experience can be improved.

The following describes the UE in this embodiment of the present invention in detail with reference to the resource pool division manner in FIG. 3.

Optionally, in an embodiment of the present invention, the resource parameter may include a size of the to-be-sent message and/or a quantity of UEs that perform sending; and
the selection module 530 may be specifically configured to:
when the priority of the to-be-sent message is a first priority, select a second resource pool if the size of the to-be-sent message exceeds a first threshold and/or the quantity of the UEs that perform sending exceeds a second threshold, where the second resource pool is a resource pool corresponding to a second priority, and the first priority is higher than the second priority.

Optionally, in an embodiment of the present invention, the resource parameter may include a quantity of UEs that perform sending and/or a parameter of a buffer status of UE that is to send the to-be-sent message; and
the selection module 530 may be specifically configured to:
when the priority of the to-be-sent message is a first priority, select a second resource pool if a buffer of the UE that is to send the to-be-sent message is in a busy state and/or the quantity of the UEs that perform sending exceeds a third threshold, where the second resource pool is a resource pool corresponding to a second priority, and the first priority is higher than the second priority.

Optionally, in an embodiment of the present invention, the resource parameter may include an occupancy rate of a first resource pool and/or an occupancy rate of a second resource pool, the first resource pool is a resource pool corresponding to the first priority, the second resource pool is a resource pool corresponding to a second priority, and the first priority is higher than the second priority; and
the selection module 530 may be specifically configured to:
when the priority of the to-be-sent message is the first priority, select the second resource pool if the occupancy rate of the first resource pool exceeds a fourth threshold and/or the occupancy rate of the second resource pool exceeds a fifth threshold.

Optionally, in an embodiment of the present invention, the UE may further include a first sending module, where
the first sending module is configured to send resource preemption indication information and the to-be-sent message by using the second resource pool; or
the first sending module is configured to send the to-be-sent message by using the second resource pool and by using a first predefined transmit power, where the first predefined transmit power is higher than a predefined transmit power corresponding to the second resource pool, and the to-be-sent message carries a message type of the to-be-sent message.

Optionally, in an embodiment of the present invention, the resource parameter may be used to indicate whether a second resource can be preempted for sending a message of a first priority, where the second resource is a resource selected for sending a message of a second priority, and the first priority is higher than the second priority; and
the selection module 530 may be specifically configured to:
when the priority of the to-be-sent message is the first priority, if the resource parameter indicates that the second resource can be preempted, select the second resource as a resource for sending the to-be-sent message.

Optionally, in an embodiment of the present invention, the resource parameter may include a first value generated by UE that is to send the message of the second priority, and when the first value meets a preset condition, the resource parameter indicates that the second resource can be preempted.

Optionally, in an embodiment of the present invention, the UE that is to send the message of the second priority determines that a third resource can be preempted, the third resource is a resource selected for sending a message of a third priority, and the third priority is not higher than the second priority.

Optionally, in an embodiment of the present invention, the resource parameter may include an occupancy rate of a first resource pool, and the first resource pool is a resource pool corresponding to a first priority; and
the selection module 530 may be specifically configured to:
when the priority of the to-be-sent message is a second priority, select a second resource pool and a transmission mode if the occupancy rate of the first resource pool exceeds a sixth threshold, where the transmission mode is a long period mode, an interval mode, or a switch mode, the second resource pool is a resource pool corresponding to the second priority, and the first priority is higher than the second priority.

Optionally, in an embodiment of the present invention, the resource parameter may be used to indicate whether there is a case in which a message of a first priority occupies a second resource pool, the second resource pool is a resource pool corresponding to a second priority, and the first priority is higher than the second priority; and
the selection module 530 may be specifically configured to:
when the priority of the to-be-sent message is the second priority, select the second resource pool and a transmission mode if there is the case in which the message of the first priority occupies the second resource pool, where the transmission mode is a long period mode, an interval mode, or a switch mode.

Optionally, in an embodiment of the present invention, the resource parameter may include a quantity of UEs that perform sending and/or an occupancy rate of a second resource pool, and the second resource pool is a resource pool corresponding to a second priority; and
the selection module 530 may be specifically configured to:
when the priority of the to-be-sent message is the second priority, select the second resource pool and a transmission mode if the quantity of the UEs that perform sending exceeds a seventh threshold and/or the occupancy rate of the second resource pool exceeds an eighth threshold, where the transmission mode is a long period mode, an interval mode, or a switch mode.

Therefore, according to the UE in this embodiment of the present invention, a to-be-occupied resource is selected according to the priority of the to-be-sent message and the resource parameter, and a resource may be flexibly selected according to different resource parameters. Therefore, resource utilization can be improved, a waste of resources can be avoided, and further, it can be ensured that there are enough resources available for sending a high-priority message, thereby improving user experience.

The following describes the UE in this embodiment of the present invention in detail with reference to the resource pool division manner in FIG. 4.

Optionally, in an embodiment of the present invention, the resource parameter may include a size of the to-be-sent message and/or a quantity of user equipments UEs that perform sending; and
the selection module 530 may be specifically configured to:
when the priority of the to-be-sent message is a first priority, select a common resource pool if the size of the to-be-sent message exceeds a ninth threshold and/or the quantity of the user equipments UEs that perform sending exceeds a tenth threshold.

Optionally, in an embodiment of the present invention, the resource parameter may include a parameter of a buffer status of UE that is to send the to-be-sent message and/or an occupancy rate of a first resource pool, and the first resource pool is a resource pool corresponding to a first priority; and
the selection module 530 may be specifically configured to:
when the priority of the to-be-sent message is the first priority, select a common resource pool if a buffer of the UE that is to send the to-be-sent message is in a busy state and/or the occupancy rate of the first resource pool exceeds an eleventh threshold.

Optionally, in an embodiment of the present invention, the resource parameter may include an occupancy rate of a common resource pool; and
the selection module 530 may be specifically configured to:
when the priority of the to-be-sent message is a first priority, select the common resource pool if the occupancy rate of the common resource pool exceeds a twelfth threshold.

Optionally, in an embodiment of the present invention, the UE may further include a second sending module, where
the second sending module is configured to send resource preemption indication information and the to-be-sent message by using the common resource pool; or
the second sending module is configured to send the to-be-sent message by using the common resource pool and by using a second predefined transmit power, where the second predefined transmit power is higher than a predefined transmit power corresponding to the common resource pool, and the to-be-sent message carries a message type of the to-be-sent message.

Therefore, according to the UE in this embodiment of the present invention, a to-be-occupied resource is selected according to the priority of the to-be-sent message and the resource parameter, and a resource may be flexibly selected according to different resource parameters. Therefore, resource utilization can be improved, a waste of resources can be avoided, and further, it can be ensured that there are enough resources available for sending a high-priority message, thereby improving user experience.

Optionally, in an embodiment of the present invention, the resource parameter may include an occupancy rate of a first resource pool, and the first resource pool is a resource pool corresponding to a first priority; and
the selection module 530 may be specifically configured to:
when the priority of the to-be-sent message is a second priority, select a common resource pool and a transmission mode if the occupancy rate of the first resource pool exceeds a thirteenth threshold, where the transmission mode is a long period mode, an interval mode, or a switch mode, and the first priority is higher than the second priority.

Optionally, in an embodiment of the present invention, the resource parameter may include a quantity of UEs that perform sending; and
the selection module 530 may be specifically configured to:
when the priority of the to-be-sent message is a second priority, select a common resource pool and a transmission mode if the quantity of the UEs that perform sending exceeds a fourteenth threshold, where the transmission mode is a long period mode, an interval mode, or a switch mode.

Optionally, in an embodiment of the present invention, the resource parameter includes an occupancy rate of a common resource pool and/or whether there is a case in which a message of a first priority occupies the common resource pool; and
the selection module 530 may be specifically configured to:
when the priority of the to-be-sent message is a second priority, select the common resource pool and a transmission mode if the occupancy rate of the common resource pool exceeds a fifteenth threshold and/or there is the case in which the message of the first priority occupies the common resource pool, where the transmission mode is a long period mode, an interval mode, or a switch mode, and the first priority is higher than the second priority.

Optionally, in an embodiment of the present invention, the resource parameter includes a first parameter that indicates whether a second resource can be preempted for sending a message of a first priority and a second parameter that indicates whether there is a resource requirement for sending the message of the first priority, where the second resource is a resource selected for sending a message of a second priority, and the first priority is higher than the second priority; and
the selection module 530 may be specifically configured to:
when the priority of the to-be-sent message is the second priority, if the first parameter indicates that the second resource can be preempted, and the second parameter indicates that there is a resource requirement for sending the message of the first priority, skip selecting the second resource as a resource for sending the to-be-sent message.

Optionally, in an embodiment of the present invention, the first parameter may include a second value generated by UE that is to send the message of the second priority, and when the second value meets a preset condition, the first parameter indicates that the second resource can be preempted.

Optionally, in an embodiment of the present invention, the UE that is to send the message of the second priority determines that a third resource can be preempted, the third resource is a resource selected for sending a message of a third priority, and the third priority is not higher than the second priority.

Therefore, according to the UE in this embodiment of the present invention, a to-be-occupied resource is selected according to the priority of the to-be-sent message and the resource parameter, and a resource may be flexibly selected according to different resource parameters. Therefore, resource utilization can be improved, a waste of resources can be avoided, and further, it can be ensured that there are enough resources available for sending a high-priority message, thereby improving user experience.

The UE 500 according to this embodiment of the present invention may be corresponding to an execution body of the method 200 according to the embodiment of the present invention, and the foregoing and other operations and/or functions of modules in the UE 500 are respectively used to implement corresponding procedures of the foregoing methods. For brevity, details are not described herein.

FIG. 6 shows a structure of user equipment according to another embodiment of the present invention. The user equipment includes at least one processor 702 (for example, a CPU), at least one network interface 705 or another communications interface, a memory 706, and at least one communications bus 703 that is configured to implement connection and communication between these apparatuses. The processor 702 is configured to execute an executable module, such as a computer program, stored in the memory 706. The memory 706 may include a high-speed random access memory (RAM: Random Access Memory), or may further include a non-volatile memory (non-volatile memory), such as at least one magnetic disk memory. A communication connection between the memory 706 and at least one other network element is implemented by using the at least one network interface 705 (which may be wired or wireless).

In some implementations, the memory 706 stores a program 7061, and the program 7061 may be executed by the processor 702. The program is used for executing the following operations:
determining a priority of a to-be-sent message;
obtaining a resource parameter, where the resource parameter includes a parameter that indicates a resource pool use status and/or a resource requirement for sending the to-be-sent message; and
selecting, according to the priority of the to-be-sent message and the resource parameter, a resource pool and/or a transmission mode for sending the to-be-sent message.

Therefore, according to the user equipment in this embodiment of the present invention, a to-be-occupied resource is selected according to the priority of the to-be-sent message and the resource parameter, and a resource may be flexibly selected according to different resource parameters. Therefore, resource utilization can be improved, a waste of resources can be avoided, and user experience can be improved.

Optionally, in an embodiment of the present invention, the resource parameter includes a size of the to-be-sent message and/or a quantity of user equipments UEs that perform sending. The processor 702 is specifically configured to: when the priority of the to-be-sent message is a first priority, select a second resource pool if the size of the to-be-sent message exceeds a first threshold and/or the quantity of the UEs that perform sending exceeds a second threshold, where the second resource pool is a resource pool corresponding to a second priority, and the first priority is higher than the second priority.

Optionally, in an embodiment of the present invention, the resource parameter includes a quantity of UEs that perform sending and/or a parameter of a buffer status of UE that is to send the to-be-sent message. The processor 702 is specifically configured to: when the priority of the to-be-sent message is a first priority, select a second resource pool if a buffer of the UE that is to send the to-be-sent message is in a busy state and/or the quantity of the UEs that perform sending exceeds a third threshold, where the second resource pool is a resource pool corresponding to a second priority, and the first priority is higher than the second priority.

Optionally, in an embodiment of the present invention, the resource parameter includes an occupancy rate of a first resource pool and/or an occupancy rate of a second resource pool, the first resource pool is a resource pool corresponding to the first priority, the second resource pool is a resource pool corresponding to a second priority, and the first priority is higher than the second priority. The processor 702 is specifically configured to: when the priority of the to-be-sent message is the first priority, select the second resource pool if the occupancy rate of the first resource pool exceeds a fourth threshold and/or the occupancy rate of the second resource pool exceeds a fifth threshold.

Optionally, the processor 702 is further specifically configured to: send resource preemption indication information and the to-be-sent message by using the second resource pool; or send the to-be-sent message by using the second resource pool and by using a first predefined transmit power, where the first predefined transmit power is higher than a predefined transmit power corresponding to the second resource pool, and the to-be-sent message carries a message type of the to-be-sent message.

Optionally, in an embodiment of the present invention, the resource parameter is used to indicate whether a second resource can be preempted for sending a message of a first priority, where the second resource is a resource selected for sending a message of a second priority, and the first priority is higher than the second priority. The processor 702 is specifically configured to: when the priority of the to-be-sent message is the first priority, if the resource parameter indicates that the second resource can be preempted, select the second resource as a resource for sending the to-be-sent message.

Optionally, in an embodiment of the present invention, the resource parameter includes a first value generated by UE that is to send the message of the second priority, and when the first value meets a preset condition, the resource parameter indicates that the second resource can be preempted.

Optionally, in an embodiment of the present invention, the UE that is to send the message of the second priority determines that a third resource can be preempted, the third resource is a resource selected for sending a message of a third priority, and the third priority is not higher than the second priority.

Optionally, in an embodiment of the present invention, the resource parameter includes an occupancy rate of a first resource pool, and the first resource pool is a resource pool corresponding to a first priority. The processor 702 is specifically configured to: when the priority of the to-be-sent message is a second priority, select a second resource pool and a transmission mode if the occupancy rate of the first resource pool exceeds a sixth threshold, where the transmission mode is a long period mode, an interval mode, or a switch mode, the second resource pool is a resource pool corresponding to the second priority, and the first priority is higher than the second priority.

Optionally, in an embodiment of the present invention, the resource parameter is used to indicate whether there is a case in which a message of a first priority occupies a second resource pool, the second resource pool is a resource pool corresponding to a second priority, and the first priority is higher than the second priority. The processor 702 is specifically configured to: when the priority of the to-be-sent message is the second priority, select the second resource pool and a transmission mode if there is the case in which the message of the first priority occupies the second resource pool, where the transmission mode is a long period mode, an interval mode, or a switch mode.

Optionally, in an embodiment of the present invention, the resource parameter includes a quantity of UEs that perform sending and/or an occupancy rate of a second resource pool, and the second resource pool is a resource pool corresponding to a second priority. The processor 702 is specifically configured to: when the priority of the to-be-sent message is the second priority, select the second resource pool and a transmission mode if the quantity of the UEs that perform sending exceeds a seventh threshold and/or the occupancy rate of the second resource pool exceeds an eighth threshold, where the transmission mode is a long period mode, an interval mode, or a switch mode.

Optionally, in an embodiment of the present invention, the resource parameter includes a size of the to-be-sent message and/or a quantity of UEs that perform sending. The processor 702 is specifically configured to: when the priority of the to-be-sent message is a first priority, select a common resource pool if the size of the to-be-sent message exceeds a ninth threshold and/or the quantity of the user equipments UEs that perform sending exceeds a tenth threshold.

Optionally, in an embodiment of the present invention, the resource parameter includes a parameter of a buffer status of UE that is to send the to-be-sent message and/or an occupancy rate of a first resource pool, and the first resource pool is a resource pool corresponding to a first priority. The processor 702 is specifically configured to: when the priority of the to-be-sent message is the first priority, select a common resource pool if a buffer of the UE that is to send the to-be-sent message is in a busy state and/or the occupancy rate of the first resource pool exceeds an eleventh threshold.

Optionally, in an embodiment of the present invention, the resource parameter includes an occupancy rate of a common resource pool. The processor 702 is specifically configured to: when the priority of the to-be-sent message is a first priority, select the common resource pool if the occupancy rate of the common resource pool exceeds a twelfth threshold.

Optionally, in an embodiment of the present invention, the processor 702 is further configured to: send resource preemption indication information and the to-be-sent message by using the common resource pool; or send the to-be-sent message by using the common resource pool and by using a second predefined transmit power, where the second predefined transmit power is higher than a predefined transmit power corresponding to the common resource pool, and the to-be-sent message carries a message type of the to-be-sent message.

Optionally, in an embodiment of the present invention, the resource parameter includes an occupancy rate of a first resource pool, and the first resource pool is a resource pool corresponding to a first priority. The processor 702 is specifically configured to: when the priority of the to-be-sent message is a second priority, select a common resource pool and a transmission mode if the occupancy rate of the first resource pool exceeds a thirteenth threshold, where the transmission mode is a long period mode, an interval mode, or a switch mode, and the first priority is higher than the second priority.

Optionally, in an embodiment of the present invention, the resource parameter includes a quantity of UEs that perform sending. The processor 702 is specifically configured to: when the priority of the to-be-sent message is a second priority, select a common resource pool and a transmission mode if the quantity of the UEs that perform sending exceeds a fourteenth threshold, where the transmission mode is a long period mode, an interval mode, or a switch mode.

Optionally, in an embodiment of the present invention, the resource parameter includes an occupancy rate of a common resource pool and/or whether there is a case in which a message of a first priority occupies the common resource pool. The processor 702 is specifically configured to: when the priority of the to-be-sent message is a second priority, select the common resource pool and a transmission mode if the occupancy rate of the common resource pool exceeds a fifteenth threshold and/or there is the case in which the message of the first priority occupies the common resource pool, where the transmission mode is a long period mode, an interval mode, or a switch mode, and the first priority is higher than the second priority.

Optionally, in an embodiment of the present invention, the resource parameter includes a first parameter that indicates whether a second resource can be preempted for sending a message of a first priority and a second parameter that indicates whether there is a resource requirement for sending the message of the first priority, where the second resource is a resource selected for sending a message of a second priority, and the first priority is higher than the second priority. The processor 702 is specifically configured to: when the priority of the to-be-sent message is the second priority, if the first parameter indicates that the second resource can be preempted, and the second parameter indicates that there is a resource requirement for sending the message of the first priority, skip selecting the second resource as a resource for sending the to-be-sent message.

Optionally, in an embodiment of the present invention, the first parameter includes a second value generated by UE that is to send the message of the second priority, and when the second value meets a preset condition, the first parameter indicates that the second resource can be preempted.

Optionally, in an embodiment of the present invention, the UE that is to send the message of the second priority determines that a third resource can be preempted, the third resource is a resource selected for sending a message of a third priority, and the third priority is not higher than the second priority.

It can be learned from the foregoing technical solution provided in this embodiment of the present invention that, in this embodiment of the present invention, a to-be-occupied resource is selected according to the priority of the to-be-sent message and the resource parameter, and a resource may be flexibly selected according to different resource parameters. Therefore, resource utilization can be improved, a waste of resources can be avoided, and user experience can be improved.

It should be understood that numbers "first", "second", ... in the embodiments of the present invention are merely used for differentiating different objects, for example, for differentiating different thresholds or resource parameters, and are not intended to limit the scope of the embodiments of the present invention, and the present invention is not limited thereto.

It should be further understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A message transmission method, comprising:
determining a priority of a to-be-sent message;
obtaining a resource parameter, wherein the resource parameter comprises a parameter that indicates a resource pool use status and/or a resource requirement for sending the to-be-sent message; and
selecting, according to the priority of the to-be-sent message and the resource parameter, a resource pool and/or a transmission mode for sending the to-be-sent message.

2. The method according to claim 1, wherein the resource parameter comprises a size of the to-be-sent message and/or a quantity of user equipments UEs that perform sending; and
the selecting, according to the priority of the to-be-sent message and the resource parameter, a resource pool and/or a transmission mode for sending the to-be-sent message comprises:
when the priority of the to-be-sent message is a first priority, selecting a second resource pool if the size of the to-be-sent message exceeds a first threshold and/or the quantity of the UEs that perform sending exceeds a second threshold, wherein the second resource pool is a resource pool corresponding to a second priority, and the first priority is higher than the second priority.

3. The method according to claim 1, wherein the resource parameter comprises a quantity of UEs that perform sending and/or a parameter of a buffer status of UE that is to send the to-be-sent message; and
the selecting, according to the priority of the to-be-sent message and the resource parameter, a resource pool and/or a transmission mode for sending the to-be-sent message comprises:
when the priority of the to-be-sent message is a first priority, selecting a second resource pool if a buffer of the UE that is to send the to-be-sent message is in a busy state and/or the quantity of the UEs that perform sending exceeds a third threshold, wherein the second resource pool is a resource pool corresponding to a second priority, and the first priority is higher than the second priority.

4. The method according to claim 1, wherein the resource parameter comprises an occupancy rate of a first resource pool and/or an occupancy rate of a second resource pool, the first resource pool is a resource pool corresponding to the first priority, the second resource pool is a resource pool corresponding to a second priority, and the first priority is higher than the second priority; and
the selecting, according to the priority of the to-be-sent message and the resource parameter, a resource pool and/or a transmission mode for sending the to-be-sent message comprises:
when the priority of the to-be-sent message is the first priority, selecting the second resource pool if the occupancy rate of the first resource pool exceeds a fourth threshold and/or the occupancy rate of the second resource pool exceeds a fifth threshold.

5. The method according to any one of claims 2 to 4, wherein the method further comprises:
sending resource preemption indication information and the to-be-sent message by using the second resource pool; or
sending the to-be-sent message by using the second resource pool and by using a first predefined transmit power, wherein the first predefined transmit power is higher than a predefined transmit power corresponding to the second resource pool, and the to-be-sent message carries a message type of the to-be-sent message.

6. The method according to claim 1, wherein the resource parameter is used to indicate whether a second resource can be preempted for sending a message of a first priority, wherein the second resource is a resource selected for sending a message of a second priority, and the first priority is higher than the second priority; and
the selecting, according to the priority of the to-be-sent message and the resource parameter, a resource pool and/or a transmission mode for sending the to-be-sent message comprises:
when the priority of the to-be-sent message is the first priority, if the resource parameter indicates that the second resource can be preempted, selecting the second resource as a resource for sending the to-be-sent message.

7. The method according to claim 6, wherein the resource parameter comprises a first value generated by UE that is to send the message of the second priority, and when the first value meets a preset condition, the resource parameter indicates that the second resource can be preempted.

8. The method according to claim 7, wherein the UE that is to send the message of the second priority determines that a third resource can be preempted, the third resource is a resource selected for sending a message of a third priority, and the third priority is not higher than the second priority.

9. The method according to claim 1, wherein the resource parameter comprises an occupancy rate of a first resource pool, and the first resource pool is a resource pool corresponding to a first priority; and
the selecting, according to the resource parameter, a resource pool and/or a transmission mode for sending the to-be-sent message, and sending the to-be-sent message comprises:
when the priority of the to-be-sent message is a second priority, selecting a second resource pool and a transmission mode if the occupancy rate of the first resource pool exceeds a sixth threshold, wherein the transmission mode is a long period mode, an interval mode, or a switch mode, the second resource pool is a resource pool corresponding to the second priority, and the first priority is higher than the second priority.

10. The method according to claim 1, wherein the resource parameter is used to indicate whether there is a case in which a message of a first priority occupies a second resource pool, the second resource pool is a resource pool corresponding to a second priority, and the first priority is higher than the second priority; and
the selecting, according to the priority of the to-be-sent message and the resource parameter, a resource pool and/or a transmission mode for sending the to-be-sent message comprises:
when the priority of the to-be-sent message is the second priority, selecting the second resource pool and a transmission mode if there is the case in which the message of the first priority occupies the second resource pool, wherein the transmission mode is a long period mode, an interval mode, or a switch mode.

11. The method according to claim 1, wherein the resource parameter comprises a quantity of UEs that perform sending and/or an occupancy rate of a second resource pool, and the second resource pool is a resource pool corresponding to a second priority; and
the selecting, according to the priority of the to-be-sent message and the resource parameter, a resource pool and/or a transmission mode for sending the to-be-sent message comprises:
when the priority of the to-be-sent message is the second priority, selecting the second resource pool and a transmission mode if the quantity of the UEs that perform sending exceeds a seventh threshold and/or the occupancy rate of the second resource pool exceeds an eighth threshold, wherein the transmission mode is a long period mode, an interval mode, or a switch mode.

12. The method according to claim 1, wherein the resource parameter comprises a size of the to-be-sent message and/or a quantity of user equipments UEs that perform sending; and
the selecting, according to the resource parameter, a resource pool and/or a transmission mode for sending the to-be-sent message, and sending the to-be-sent message comprises:
when the priority of the to-be-sent message is a first priority, selecting a common resource pool if the size of the to-be-sent message exceeds a ninth threshold and/or the quantity of the user equipments UEs that perform sending exceeds a tenth threshold.

13. The method according to claim 1, wherein the resource parameter comprises a parameter of a buffer status of UE that is to send the to-be-sent message and/or an occupancy rate of a first resource pool, and the first resource pool is a resource pool corresponding to a first priority; and
the selecting, according to the priority of the to-be-sent message and the resource parameter, a resource pool and/or a transmission mode for sending the to-be-sent message comprises:
when the priority of the to-be-sent message is the first priority, selecting a common resource pool if a buffer of the UE that is to send the to-be-sent message is in a busy state and/or the occupancy rate of the first resource pool exceeds an eleventh threshold.

14. The method according to claim 1, wherein the resource parameter comprises an occupancy rate of a common resource pool; and
the selecting, according to the priority of the to-be-sent message and the resource parameter, a resource pool and/or a transmission mode for sending the to-be-sent message comprises:
when the priority of the to-be-sent message is a first priority, selecting the common resource pool if the occupancy rate of the common resource pool exceeds a twelfth threshold.

15. The method according to any one of claims 12 to 14, wherein the method further comprises:
sending resource preemption indication information and the to-be-sent message by using the common resource pool; or
sending the to-be-sent message by using the common resource pool and by using a second predefined transmit power, wherein the second predefined transmit power is higher than a predefined transmit power corresponding to the common resource pool, and the to-be-sent message carries a message type of the to-be-sent message.

16. The method according to claim 1, wherein the resource parameter comprises an occupancy rate of a first resource pool, and the first resource pool is a resource pool corresponding to a first priority; and
the selecting, according to the priority of the to-be-sent message and the resource parameter, a resource pool and/or a transmission mode for sending the to-be-sent message comprises:
when the priority of the to-be-sent message is a second priority, selecting a common resource pool and a transmission mode if the occupancy rate of the first resource pool exceeds a thirteenth threshold, wherein the transmission mode is a long period mode, an interval mode, or a switch mode, and the first priority is higher than the second priority.

17. The method according to claim 1, wherein the resource parameter comprises a quantity of UEs that perform sending; and
the selecting, according to the priority of the to-be-sent message and the resource parameter, a resource pool and/or a transmission mode for sending the to-be-sent message comprises:
when the priority of the to-be-sent message is a second priority, selecting a common resource pool and a transmission mode if the quantity of the UEs that perform sending exceeds a fourteenth threshold, wherein the transmission mode is a long period mode, an interval mode, or a switch mode.

18. The method according to claim 1, wherein the resource parameter comprises an occupancy rate of a common resource pool and/or whether there is a case in which a message of a first priority occupies the common resource pool; and
the selecting, according to the priority of the to-be-sent message and the resource parameter, a resource pool and/or a transmission mode for sending the to-be-sent message comprises:
when the priority of the to-be-sent message is a second priority, selecting the common resource pool and a transmission mode if the occupancy rate of the common resource pool exceeds a fifteenth threshold and/or there is the case in which the message of the first priority occupies the common resource pool, wherein the transmission mode is a long period mode, an interval mode, or a switch mode, and the first priority is higher than the second priority.

19. The method according to claim 1, wherein the resource parameter comprises a first parameter that indicates whether a second resource can be preempted for sending a message of a first priority and a second parameter that indicates whether there is a resource requirement for sending the message of the first priority, wherein the second resource is a resource selected for sending a message of a second priority, and the first priority is higher than the second priority; and
the selecting, according to the priority of the to-be-sent message and the resource parameter, a resource pool and/or a transmission mode for sending the to-be-sent message comprises:
when the priority of the to-be-sent message is the second priority, if the first parameter indicates that the second resource can be preempted, and the second parameter indicates that there is a resource requirement for sending the message of the first priority, skipping selecting the second resource as a resource for sending the to-be-sent message.

20. The method according to claim 19, wherein the first parameter comprises a second value generated by UE that is to send the message of the second priority, and when the second value meets a preset condition, the first parameter indicates that the second resource can be preempted.

21. The method according to claim 20, wherein the UE that is to send the message of the second priority determines that a third resource can be preempted, the third resource is a resource selected for sending a message of a third priority, and the third priority is not higher than the second priority.

22. User equipment UE, comprising:
a determining module, configured to determine a priority of a to-be-sent message;
an obtaining module, configured to obtain a resource parameter, wherein the resource parameter comprises a parameter that indicates a resource pool use status and/or a resource requirement for sending the to-be-sent message; and
a selection module, configured to select, according to the priority that is of the to-be-sent message and that is determined by the determining module and the resource parameter obtained by the obtaining module, a resource pool and/or a transmission mode for sending the to-be-sent message.

23. The UE according to claim 22, wherein the resource parameter comprises a size of the to-be-sent message and/or a quantity of UEs that perform sending; and
the selection module is specifically configured to:
when the priority of the to-be-sent message is a first priority, select a second resource pool if the size of the to-be-sent message exceeds a first threshold and/or the quantity of the UEs that perform sending exceeds a second threshold, wherein the second resource pool is a resource pool corresponding to a second priority, and the first priority is higher than the second priority.

24. The UE according to claim 22, wherein the resource parameter comprises a quantity of UEs that perform sending and/or a parameter of a buffer status of UE that is to send the to-be-sent message; and
the selection module is specifically configured to:
when the priority of the to-be-sent message is a first priority, select a second resource pool if a buffer of the UE that is to send the to-be-sent message is in a busy state and/or the quantity of the UEs that perform sending exceeds a third threshold, wherein the second resource pool is a resource pool corresponding to a second priority, and the first priority is higher than the second priority.

25. The UE according to claim 22, wherein the resource parameter comprises an occupancy rate of a first resource pool and/or an occupancy rate of a second resource pool, the first resource pool is a resource pool corresponding to the first priority, the second resource pool is a resource pool corresponding to a second priority, and the first priority is higher than the second priority; and
the selection module is specifically configured to:
when the priority of the to-be-sent message is the first priority, select the second resource pool if the occupancy rate of the first resource pool exceeds a fourth threshold and/or the occupancy rate of the second resource pool exceeds a fifth threshold.

26. The UE according to any one of claims 23 to 25, wherein the UE further comprises a first sending module, wherein
the first sending module is configured to send resource preemption indication information and the to-be-sent message by using the second resource pool; or
the first sending module is configured to send the to-be-sent message by using the second resource pool and by using a first predefined transmit power, wherein the first predefined transmit power is higher than a predefined transmit power corresponding to the second resource pool, and the to-be-sent message carries a message type of the to-be-sent message.

27. The UE according to claim 22, wherein the resource parameter is used to indicate whether a second resource can be preempted for sending a message of a first priority, wherein the second resource is a resource selected for sending a message of a second priority, and the first priority is higher than the second priority; and
the selection module is specifically configured to:
when the priority of the to-be-sent message is the first priority, if the resource parameter indicates that the second resource can be preempted, select the second resource as a resource for sending the to-be-sent message.

28. The UE according to claim 27, wherein the resource parameter comprises a first value generated by UE that is to send the message of the second priority, and when the first value meets a preset condition, the resource parameter indicates that the second resource can be preempted.

29. The UE according to claim 28, wherein the UE that is to send the message of the second priority determines that a third resource can be preempted, the third resource is a resource selected for sending a message of a third priority, and the third priority is not higher than the second priority.

30. The UE according to claim 22, wherein the resource parameter comprises an occupancy rate of a first resource pool, and the first resource pool is a resource pool corresponding to a first priority; and
the selection module is specifically configured to:
when the priority of the to-be-sent message is a second priority, select a second resource pool and a transmission mode if the occupancy rate of the first resource pool exceeds a sixth threshold, wherein the transmission mode is a long period mode, an interval mode, or a switch mode, the second resource pool is a resource pool corresponding to the second priority, and the first priority is higher than the second priority.

31. The UE according to claim 22, wherein the resource parameter is used to indicate whether there is a case in which a message of a first priority occupies a second resource pool, the second resource pool is a resource pool corresponding to a second priority, and the first priority is higher than the second priority; and
the selection module is specifically configured to:
when the priority of the to-be-sent message is the second priority, select the second resource pool and a transmission mode if there is the case in which the message of the first priority occupies the second resource pool, wherein the transmission mode is a long period mode, an interval mode, or a switch mode.

32. The UE according to claim 22, wherein the resource parameter comprises a quantity of UEs that perform sending and/or an occupancy rate of a second resource pool, and the second resource pool is a resource pool corresponding to a second priority; and
the selection module is specifically configured to:
when the priority of the to-be-sent message is the second priority, select the second resource pool and a transmission mode if the quantity of the UEs that perform sending exceeds a seventh threshold and/or the occupancy rate of the second resource pool exceeds an eighth threshold, wherein the transmission mode is a long period mode, an interval mode, or a switch mode.

33. The UE according to claim 22, wherein the resource parameter comprises a size of the to-be-sent message and/or a quantity of UEs that perform sending; and
the selection module is specifically configured to:
when the priority of the to-be-sent message is a first priority, select a common resource pool if the size of the to-be-sent message exceeds a ninth threshold and/or the quantity of the UEs that perform sending exceeds a tenth threshold.

34. The UE according to claim 22, wherein the resource parameter comprises a parameter of a buffer status of UE that is to send the to-be-sent message and/or an occupancy rate of a first resource pool, and the first resource pool is a resource pool corresponding to a first priority; and
the selection module is specifically configured to:
when the priority of the to-be-sent message is the first priority, select a common resource pool if a buffer of the UE that is to send the to-be-sent message is in a busy state and/or the occupancy rate of the first resource pool exceeds an eleventh threshold.

35. The UE according to claim 22, wherein the resource parameter comprises an occupancy rate of a common resource pool; and
the selection module is specifically configured to:
when the priority of the to-be-sent message is a first priority, select the common resource pool if the occupancy rate of the common resource pool exceeds a twelfth threshold.

36. The UE according to any one of claims 33 to 35, wherein the UE further comprises a second sending module, wherein
the second sending module is configured to send resource preemption indication information and the to-be-sent message by using the common resource pool; or
the second sending module is configured to send the to-be-sent message by using the common resource pool and by using a second predefined transmit power, wherein the second predefined transmit power is higher than a predefined transmit power corresponding to the common resource pool, and the to-be-sent message carries a message type of the to-be-sent message.

37. The UE according to claim 22, wherein the resource parameter comprises an occupancy rate of a first resource pool, and the first resource pool is a resource pool corresponding to a first priority; and
the selection module is specifically configured to:
when the priority of the to-be-sent message is a second priority, select a common resource pool and a transmission mode if the occupancy rate of the first resource pool exceeds a thirteenth threshold, wherein the transmission mode is a long period mode, an interval mode, or a switch mode, and the first priority is higher than the second priority.

38. The UE according to claim 22, wherein the resource parameter comprises a quantity of UEs that perform sending; and
the selection module is specifically configured to:
when the priority of the to-be-sent message is a second priority, select a common resource pool and a transmission mode if the quantity of the UEs that perform sending exceeds a fourteenth threshold, wherein the transmission mode is a long period mode, an interval mode, or a switch mode.

39. The UE according to claim 22, wherein the resource parameter comprises an occupancy rate of a common resource pool and/or whether there is a case in which a message of a first priority occupies the common resource pool; and
the selection module is specifically configured to:
when the priority of the to-be-sent message is a second priority, select the common resource pool and a transmission mode if the occupancy rate of the common resource pool exceeds a fifteenth threshold and/or there is the case in which the message of the first priority occupies the common resource pool, wherein the transmission mode is a long period mode, an interval mode, or a switch mode, and the first priority is higher than the second priority.

40. The UE according to claim 22, wherein the resource parameter comprises a first parameter that indicates whether a second resource can be preempted for sending a message of a first priority and a second parameter that indicates whether there is a resource requirement for sending the message of the first priority, wherein the second resource is a resource selected for sending a message of a second priority, and the first priority is higher than the second priority; and
the selection module is specifically configured to:
when the priority of the to-be-sent message is the second priority, if the first parameter indicates that the second resource can be preempted, and the second parameter indicates that there is a resource requirement for sending the message of the first priority, skip selecting the second resource as a resource for sending the to-be-sent message.

41. The UE according to claim 40, wherein the first parameter comprises a second value generated by UE that is to send the message of the second priority, and when the second value meets a preset condition, the first parameter indicates that the second resource can be preempted.

42. The UE according to claim 41, wherein the UE that is to send the message of the second priority determines that a third resource can be preempted, the third resource is a resource selected for sending a message of a third priority, and the third priority is not higher than the second priority.
